# EUROPEAN PATENT APPLICATION

(11) **EP 2 690 848 A1**
(43) Date of publication of application: **29.01.2014**
(21) Application number: 13152738.4
(22) Date of filing: 25.01.2013
(51) Int. Cl.: H04M 1/725, G06F 3/0488, G06K 17/00, H04L 12/18, G06F 3/14

(54) **Mobile terminal and controlling method thereof**

(30) Priority: 26.07.2012 KR 20120081800
(71) Applicant: LG Electronics, Inc., Seoul, 150-721 (KR)
(72) Inventor: Kim, Miyoung, 153-801 SEOUL (KR); Park, Jinwoo, 153-801 SEOUL (KR)
(74) Representative: Cabinet Plasseraud

(57) **Abstract**

A mobile terminal and controlling method thereof are disclosed, by which a handwritten object outputted via the mobile terminal can be set to be shared with an external terminal. The present invention includes a wireless communication unit configured to perform a communication with an external terminal, a touchscreen configured to receive a 1^{st} touch input of a 1^{st} desired trace, and a controller, if the 1^{st} touch input is applied in a 1^{st} handwriting input mode, controlling a 1^{st} handwritten object drawn along the 1^{st} desired trace to be simultaneously displayed via the touchscreen and the external terminal, the controller, if the 1^{st} touch input is applied in a 2^{nd} handwriting input mode, controlling the 1^{st} handwritten object to be displayed on the touchscreen only.

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for setting a handwritten object outputted via the mobile terminal to be shared with an external terminal.

### Discussion of the Related Art

Generally, terminals can be classified into mobile/portable terminals and stationary terminals. The mobile terminals can be classified into handheld terminals and vehicle mount terminals again according to possibility of user's direct portability.

As functions of the terminal are diversified, the terminal is implemented as a multimedia player provided with composite functions such as photographing of photos or moving pictures, playback of music or moving picture files, game play, broadcast reception and the like for example.

Moreover, the terminal expands its roles into a scheduler function for simple memo input and storage, schedule management and the like. Recently, in order to reinforce the scheduler function, a terminal tends to be designed for enabling a user to input handwriting without activating an application separately.

However, while a user in performing a handwriting input, a method for sharing the handwriting input with an external terminal has not been developed yet. In order share a result of a handwriting input previously performed by a user with another user, it is mandatory for a user to perform such an operation as an action of ending a handwriting, an action of applying a capture command, an action of activating an application (e.g., a text message application, an instant message application, etc.) for transmitting a captured image to an external terminal, an action of attaching a captured image and the like. Therefore, it may be inconvenient for a user to achieve such sharing.

### SUMMARY OF THE INVENTION

Accordingly, embodiments of the present invention are directed to a mobile terminal and controlling method thereof that substantially obviate one or more problems due to limitations and disadvantages of the related art.

An object of the present invention is to provide a mobile terminal and controlling method thereof, by which user's manipulation is enhanced.

In particular, one object of the present invention is to provide a mobile terminal and controlling method thereof, by which a handwritten object drawn onto a touchscreen can be shared with an external terminal easily and conveniently.

Additional advantages, objects, and features of the invention will be set forth in the disclosure herein as well as the accompanying drawings. Such aspects may also be appreciated by those skilled in the art based on the disclosure herein.

To achieve these objects and other advantages and in accordance with the purpose of the invention, as embodied and broadly described herein, a mobile terminal according to the present invention may include a wireless communication unit configured to communicate with an external terminal; a touchscreen configured to receive a 1^{st} touch input of a 1^{st} desired trace; and a controller configured such that: if the 1^{st} touch input is applied in a 1^{st} handwriting input mode then a 1^{st} handwritten object drawn along the 1^{st} desired trace is simultaneously displayed via the touchscreen and the external terminal, and if the 1^{st} touch input is applied in a 2^{nd} handwriting input mode, then the 1^{st} handwritten object is displayed on the touchscreen only.

In another aspect of the present invention, a method of controlling a mobile terminal according to the present invention may include the steps of establishing a communication channel with an external terminal, entering either a first handwriting input mode or a second handwriting input mode based on a user input, if a first touch input of a first desired trace is applied in the first handwriting input mode, displaying a first handwritten object drawn along the first desired trace on both a touchscreen and the external terminal simultaneously, and if the first touch input is applied in the second handwriting input mode, displaying the first handwritten object on the touchscreen only.

Effects obtainable from the present invention may be non-limited by the above mentioned effect. And, other unmentioned effects can be clearly understood from the following description by those having ordinary skill in the technical field to which the present invention pertains. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The above and other aspects, features, and advantages of the present invention will become more apparent upon consideration of the following description of preferred embodiments, taken in conjunction with the accompanying drawing figures. In the drawings:

FIG. 1 is a block diagram of a mobile terminal according to one embodiment of the present invention;

FIG. 2A is a front perspective diagram of a mobile terminal according to one embodiment of the present invention;

FIG. 2B is a rear perspective diagram of a mobile terminal according to one embodiment of the present invention;

FIGs. 3A to 3C are diagrams of display screen configurations for one example of displaying a plurality of function tools on a touchscreen;

FIG. 4 is a diagram of display configuration for one example to describe an operation of a mobile terminal using pipette pens shown in FIGs. 3A to 3C;

FIG. 5 is a diagram of display screen configuration for one example to describe an operation of a mobile terminal in case that a pipette pen is set to an application pipette pen;

FIG. 6 is a diagram of display screen configuration for one example to describe an operation of a mobile terminal in case that a pipette pen is set to a function pipette pen;

FIG. 7 is a diagram of display screen configuration for one example to describe an operation of a mobile terminal in case that a pipette pen is set to a text pipette pen;

FIG. 8 is a diagram of display screen configuration for one example to describe an operation of a mobile terminal in case that a pipette pen is set to a color pipette pen;

FIG. 9 is a diagram of display screen configuration for one example to describe a process for drawing a handwriting input by applying attributes assigned to a function tool;

FIG. 10 is a diagram of display screen configuration for one example to describe a process for manually changing attributes assigned to a function tool based on a user manipulation;

FIG. 11 is a diagram of display screen configuration for one example to describe a process for simultaneously performing a handwriting input and a voice recording using a function tool;

FIG. 12A and FIG. 12B are diagrams of display screen configuration for one example to describe whether to display a handwritten object, which is drawn using a drawing pen and private pen, on an external terminal;

FIG. 13 is a diagram of display screen configuration for one example to describe a process for capturing a real-time output image displayed on a touchscreen using a capture pen;

FIGs. 14A to 14D are diagrams of display screen configuration for one example to describe an operation of a mobile terminal using a share pen;

FIG. 15 is a diagram of display screen configuration for one example of a process for transmitting a captured image to an account designated by a share pen without waiting for a user input;

FIG. 16 is a diagram of display screen configuration for one example to describe a process for adding a new function tool to a touchscreen using an add pen;

FIG. 17 is a diagram of display screen configuration for another example for adding a new function tool;

FIG. 18 is a diagram of display screen configuration for one example to describe a process for changing a highlighter pen into a private highlighter pen;

FIG. 19 is a flowchart for a method of sharing a handwriting input in a mobile terminal according to one embodiment of the present invention;

FIG. 20 is a diagram of display screen configuration for one example of setting a presence or non-presence of a handwriting input authority of an external terminal set to share a handwriting input;

FIG. 21 is a diagram of touchscreen configuration for one example of setting an editing authority of a handwritten object displayed on a touchscreen;

FIG. 22 is a diagram of display screen configuration for one example to describe a process for performing a voice recording after a handwritten object has been drawn on a touchscreen;

FIG. 23 is a diagram of display screen configuration for one example to describe a process for displaying a 1^{st} handwritten object and a 2^{nd} handwritten object in a manner of overlapping the 1^{st} and 2^{nd} handwritten objects with each other; and

FIGs. 24A to 24D are diagrams of display screen configuration for one example to describe a process for displaying a 1^{st} handwritten object and a 2^{nd} handwritten object on different regions of a touchscreen, respectively.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts. The suffixes 'module' and 'unit' for the elements used in the following description are given or used in common by considering facilitation in writing this disclosure only but fail to have meanings or roles discriminated from each other.

First of all, mobile terminals described in this disclosure can include a mobile phone, a smart phone, a laptop computer, a digital broadcast terminal, a PDA (personal digital assistants), a PMP (portable multimedia player), a navigation system and the like.

Except a case applicable to a mobile terminal only, it is apparent to those skilled in the art that the configurations according to an embodiment described in this disclosure is applicable to such a stationary terminal as a digital TV, a desktop computer and the like.

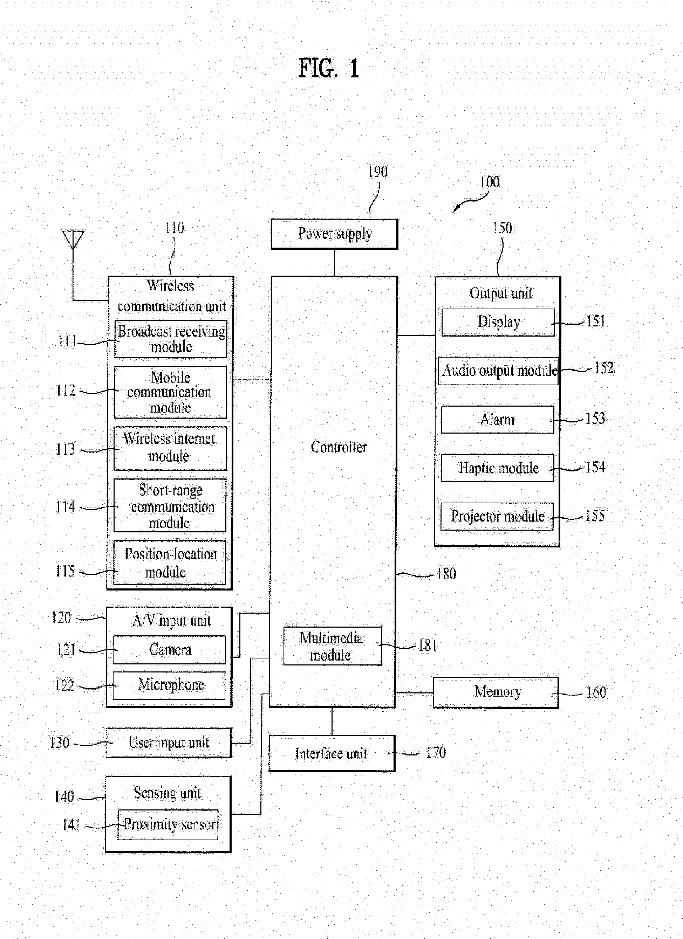

FIG. 1 is a block diagram of a mobile terminal according to one embodiment of the present invention.

Referring to FIG. 1, a mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display unit 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display unit 151, an audio output module 152, an alarm unit 153, a haptic module 154, a projector module 155 and the like.

The display unit 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display unit 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display unit 151 can be implemented in the optical transmittive type as well. In this configuration, a user is able to see an object in rear of a terminal body via the area occupied by the display unit 151 of the terminal body.

At least two display units 151 can be provided to the mobile terminal 100 in accordance with the implemented configuration of the mobile terminal 100. For instance, a plurality of display units can be arranged on a single face of the mobile terminal 100 in a manner of being spaced apart from each other or being built in one body. Alternatively, a plurality of display units can be arranged on different faces of the mobile terminal 100.

In case that the display unit 151 and a sensor for detecting a touch action (hereinafter called 'touch sensor') configures a mutual layer structure (hereinafter called 'touchscreen'), it is able to use the display unit 151 as an input device as well as an output device. In this case, the touch sensor can be configured as a touch film, a touch sheet, a touchpad or the like.

The touch sensor can be configured to convert a pressure applied to a specific portion of the display unit 151 or a variation of a capacitance generated from a specific portion of the display unit 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display unit 151 is touched.

Referring to FIG. 1, a proximity sensor (not shown in the drawing) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

In the following description, for clarity, an action that a pointer approaches without contacting with the touchscreen to be recognized as located on the touchscreen is named 'proximity touch'. And, an action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display unit 151 or the audio output unit 152. Hence, the display unit 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display unit 151, on an external screen or wall according to a control signal of the controller 180.

In particular, the projector module 155 can include a light source (not shown in the drawing) generating light (e.g., laser) for projecting an image externally, an image producing means (not shown in the drawing) for producing an image to output externally using the light generated from the light source, and a lens (not shown in the drawing) for enlarging to output the image externally in a predetermined focus distance. And, the projector module 155 can further include a device (not shown in the drawing) for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. And, it is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

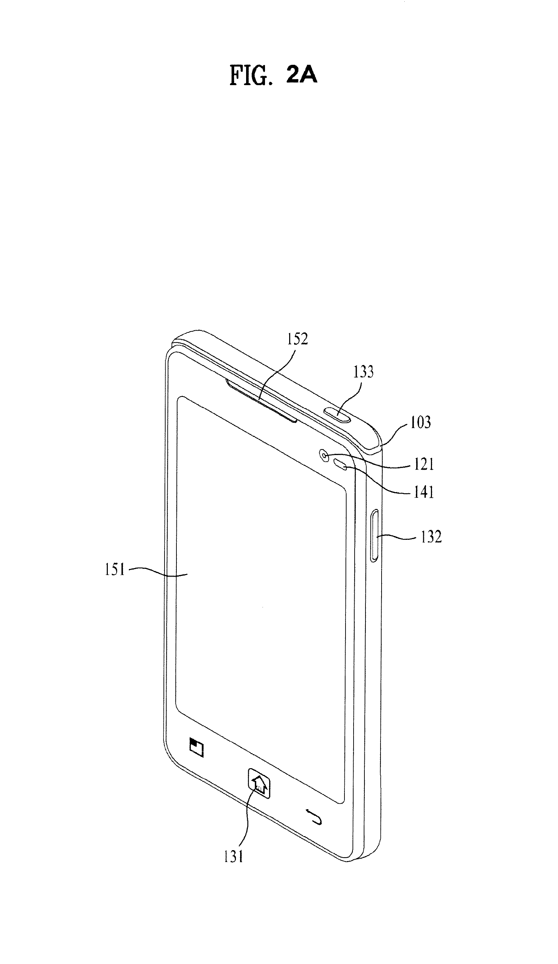

FIG. 2A is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2A, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display unit 151, an audio output unit 152, a camera 121, user input units 130/131 and 132, a microphone 122, an interface 180 and the like can be provided to the terminal body, and more particularly, to the front case 101.

The display unit 151 occupies most of a main face of the front case 101. The audio output unit 151 and the camera 121 are provided to an area adjacent to one of both end portions of the display unit 151, while the user input unit 131 and the microphone 122 are provided to another area adjacent to the other end portion of the display unit 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display unit 151 or the like can be inputted to the second manipulating unit 132.

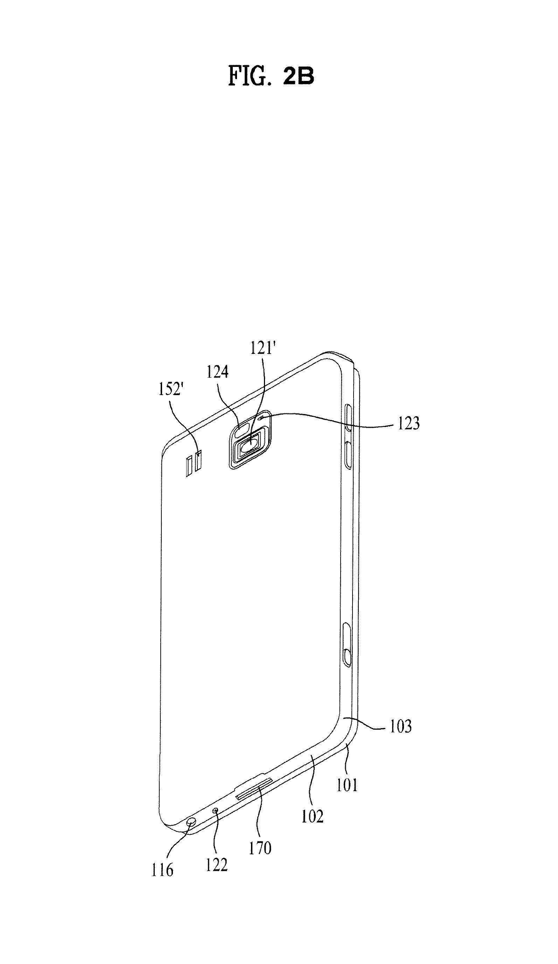

FIG. 2B is a perspective diagram of a backside of the terminal shown in FIG. 2A.

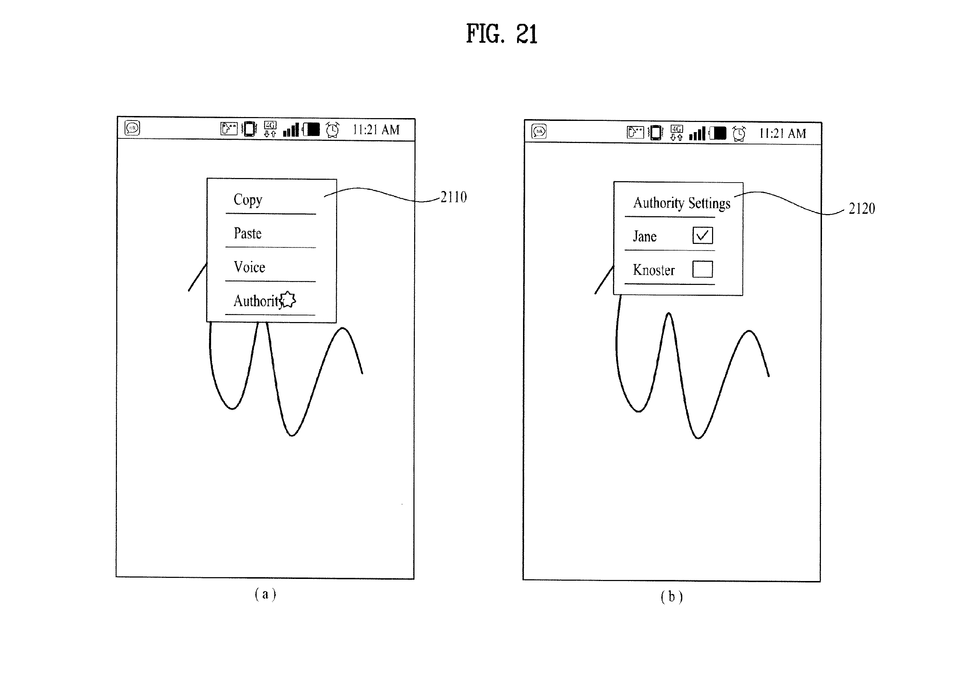

Referring to FIG. 2B, a camera 121' can be additionally provided to a backside of the terminal body, and more particularly, to the rear case 102. The camera 121 has a photographing direction that is substantially opposite to that of the former camera 121 shown in FIG. 21A and may have pixels differing from those of the firmer camera 121.

Preferably, for instance, the former camera 121 has low pixels enough to capture and transmit a picture of user's face for a video call, while the latter camera 121' has high pixels for capturing a general subject for photography without transmitting the captured subject. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2A and may be used for implementation of a speakerphone mode in talking over the terminal.

A broadcast signal receiving antenna 124 can be additionally provided to the lateral side of the terminal body as well as an antenna for communication or the like. The antenna 124 constructing a portion of the broadcast receiving module 111 shown in FIG. 1 can be retractably provided to the terminal body.

A power supply unit 190 for supplying a power to the terminal 100 is provided to the terminal body. And, the power supply unit 190 can be configured to be built within the terminal body. Alternatively, the power supply unit 190 can be configured to be detachably connected to the terminal body.

A touchpad 135 for detecting a touch can be additionally provided to the rear case 102. The touchpad 135 can be configured in a light transmittive type like the display unit 151. In this case, if the display unit 151 is configured to output visual information from its both faces, it is able to recognize the visual information via the touchpad 135 as well. The information outputted from both of the faces can be entirely controlled by the touchpad 135. Alternatively, a display is further provided to the touchpad 135 so that a touchscreen can be provided to the rear case 102 as well.

The touchpad 135 is activated by interconnecting with the display unit 151 of the front case 101. The touchpad 135 can be provided in rear of the display unit 151 in parallel. The touchpad 135 can have a size equal to or smaller than that of the display unit 151.

In the following description, embodiments related to a controlling method implemented in the above-configured mobile terminal 100 are explained with reference to the accompanying drawings.

For clarity and convenience of the following description, assume that the mobile terminal 100 mentioned in the following description includes at least one of the components shown in FIG. 1. In particular, the mobile terminal 100 according to the present invention may be able to further include the wireless communication unit 100, the display unit 151, the memory 160 and the controller 180 among the components shown in FIG. 1. Occasionally, the mobile terminal 100 according to the present invention may be able to further include the microphone 122 among the components shown in FIG. 1.

If the display module 151 of the mobile termin1I 100 according to the present invention includes a touchscreen 151, implementation of the following embodiments may be further facilitated. Therefore, the following description is made on the assumption that the display module 151 includes the touchscreen 151.

The mobile terminal 100 according to the present invention is configured to share a handwriting input with an external terminal device and characterized in controlling whether to share a handwriting input using a function tool displayed on the touchscreen 151. Prior to describing a handwriting input share between a mobile terminal 100 of the present invention and an external terminal device, a process for displaying a function tool displayed on a touchscreen 151 and an operation of the mobile terminal 100 using the function tool shall be described in detail. After completion of the description of the function tool, a method of sharing a handwriting input using the mobile terminal 100 according to the present invention shall be described in detail.

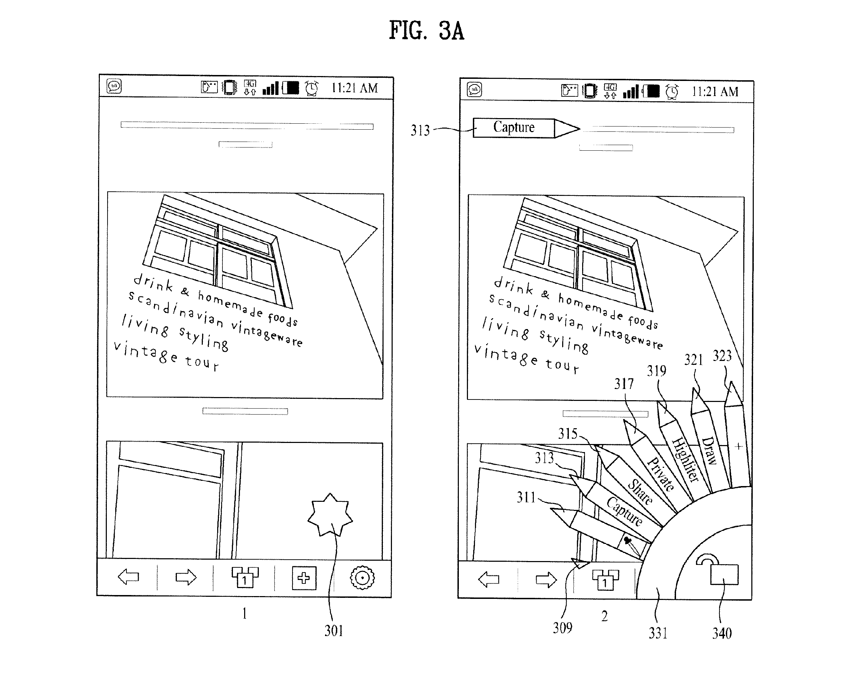

FIGs. 3A to 3C are diagrams of display screen configurations for one example of displaying a plurality of function tools on a touchscreen 151.

Referring to FIGs. 3A to 3C, if an appropriate user input 301 is applied to the touchscreen 151 [e.g., a prescribed corner of the touchscreen 151 is pressed long (i.e., a contact with a pointer is maintained for prescribed duration)] [FIG. 3A 1], the controller 180 may be able to control function tools 311, 313, 315, 317, 319, 321 and 323, each of which is configured in a pen shape, to be displayed on the touchscreen 151 [FIG. 3A 2]. For example, FIG. 3A 2 shows a layout configured in a manner that the function tools 311, 313, 315, 317, 319, 321 and 323 are put in a palette 331 having a quarter-circle shape.

Layout and display position of the function tools displayed on the touchscreen 151 need not depend on the example shown in FIG. 3A. In particular, referring to FIG. 3A, the function tools 311, 313, 315, 317, 319, 321 and 323 are displayed on a prescribed corner of the touchscreen 151 and have the layout configured in a manner that the function tools 311, 313, 315, 317, 319, 321 and 323 are put in the palette 331 of the quarter-circle shape, by which the present embodiment may be non-limited. For instance, the function tools may be displayable at other positions on other layouts.

In response to a user input applied to page the function tools, the controller 180 may be able to control the display position and layout of the functions tools to be adjusted. Although FIG. 3A 1 shows the example of applying the touch input to the prescribed corner of the touchscreen 151, if another touch input 303 is applied to a position different from that shown in FIG. 3A 1 to display the function tools, the controller 180 may control the functions tools to be displayed at a position different from that shown in FIG. 3A 2 on a layout different from that shown in FIG. 3A 2.

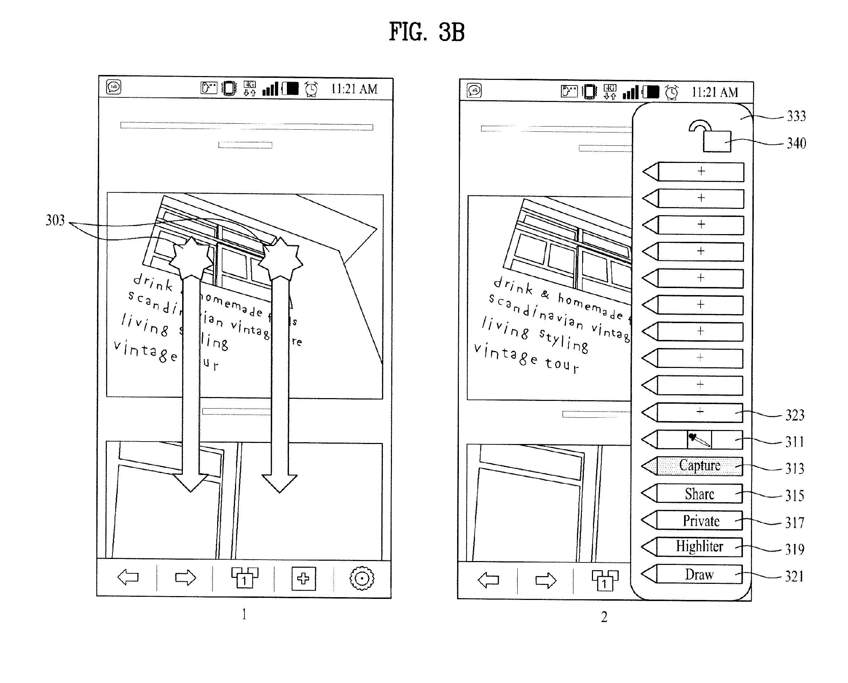

For instance, referring to FIG. 3B, in order to display function tools, while a user maintains a touch to the touchscreen 151 with two pointers [303], if the user flicks the pointers upward or downward [FIG. 3B 1], the controller 180 may be able to control the function tools 311, 313, 315, 317, 319, 321 and 323 to be displayed on a right part of the touchscreen 151 in a manner of having a layout 333 extending in portrait direction [FIG. 3B 2]. In doing so, when the function tools are displayed, the controller 180 may apply such an animation effect that a rolled-up palette 333 having the function tools put therein is rolled down. In particular, the controller 180 may control the output shown in FIG. 3B 2 to be completed in a manner that the number of the displayed function tools gradually increases depending on the passage of time.

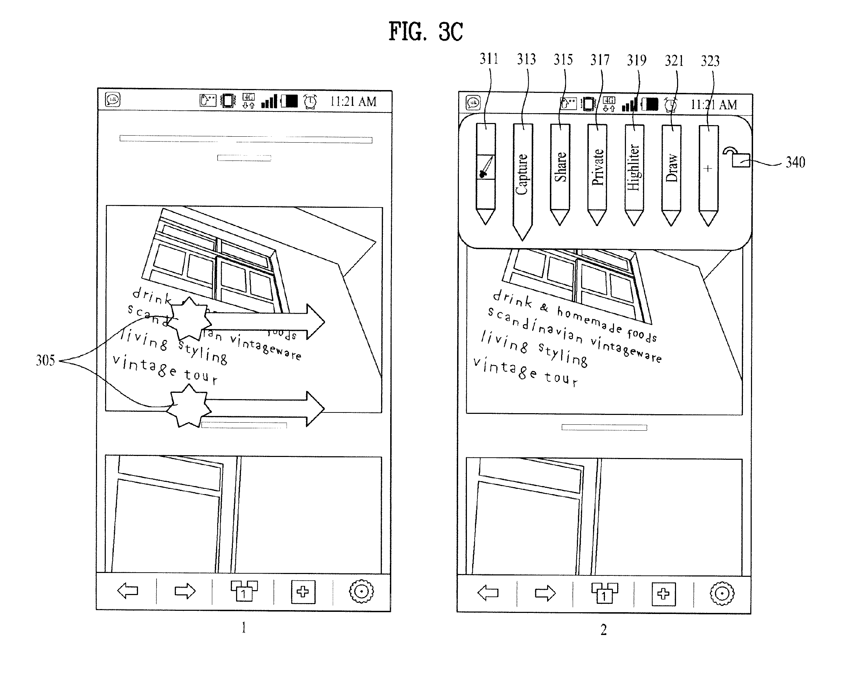

For another instance, referring to FIG. 3C, in order to display function tools, while a user maintains a touch to the touchscreen 151 with two pointers, if the user flicks the pointers in right direction [305] [FIG. 3C 1], the controller 180 may be able to control the function tools 311, 313, 315, 317, 319, 321 and 323 to be displayed on a top part of the touchscreen 151 in a manner of having a layout 335 extending in landscape direction [FIG. 3C 2]. In doing so, when the function tools are displayed, it is a matter of course that the animation effect described with reference to FIG. 3B 2 is applicable.

Meanwhile, FIG. 3A shows the example that the user input to display the function tools includes the touch input applied to the prescribed corner of the touchscreen 151 [301]. FIG. 3B/3C shows the example that the user input to display the function tools includes the flicking of two pointers in preset direction [303/305]. Yet, these examples are just provided for clarity and convenience of the descriptions, by which the user input may be non-limited. For instance, the function tools can be displayed based on such a user input as a speech command, an external key manipulation and the like as well as the touch input.

Besides, in the example shown in FIG. 3, if a plurality of user inputs for displaying function tools exist, the display position and/or layout of the function tools may be adjusted depending on which one of the user inputs is inputted. In particular, if a command for displaying function tools is inputted as a first user input, the functions tools may be displayed on the touchscreen in a manner of appearing at a first position on a first layout. Alternatively, if a command for displaying function tools is inputted as a second user input, the functions tools may be displayed on the touchscreen in a manner of appearing at a second position on a second layout.

Referring now to FIG. 3A 2, a lock-shaped button 340 is displayed on the palette 331 having the function tools put therein. Referring now to FIG. 3B 2, a lock-shaped button 340 is displayed on the palette 333 having the function tools put therein. Referring now to FIG. 3C 2, a lock-shaped button 340 is displayed on the palette 335 having the function tools put therein. In particular, the lock-shaped button 340 may be displayed to adjust whether to keep displaying the function tools on the touchscreen 151. For instance, if a mode of the lock-shaped button 340 is set to a locked mode, the controller 180 may keep the function tools being displayed on the touchscreen 151 before the lock-shaped button 340 is switched into an unlock shaped button and a prescribed condition is met.

On the contrary, referring now to FIG. 3A 2, FIG. 3B 2 or FIG. 3C 2, if the mode of the lock-shaped button 340 is set to an unlocked mode, the controller 180 may control the function tools to stop being displayed if a prescribed condition is met. For instance, if such a condition as a case that a user input (e.g., a touch input to the touchscreen 151, a user input manipulated by an external key, etc.) is not detected for prescribed duration after starting to display the function tools, a case that a user selects one of a plurality of the function tools currently displayed on the touchscreen 151, a case that a prescribed time goes by after selection of one of a plurality of the function tools, and the like is met, the controller 180 may control the function tools (and the palette) to stop being displayed.

In order to select a prescribed one of a plurality of the function tools displayed on the touchscreen 151, a user may be able to select the prescribed function tool by applying a touch input (e.g., a touch input to a function tool to activate, a touch input performed in a manner of flicking a function tool to activate in a prescribed direction, etc.) to the corresponding function tool. Once the user selects the prescribed function tool from a plurality of the function tools, the controller 180 may control the selected function tool to be identifiably displayed on the touchscreen 151. This shall be described in detail with reference to FIG. 3A 2, FIG. 3B 3 and FIG. 3C 3 as follows. To this end, assume that the function tool selected by the user in FIG. 3A 2, FIG. 3B 3 or FIG. 3C 3 includes a capture pen 313.

For instance, referring to FIG. 3A 2, the controller 180 may control a function tool 313, which is selected by a user, to be further displayed on a region (e.g., a left top corner of the touchscreen 151 shown in FIG. 3A 2) of the touchscreen 151 configured not to overlap with a region (e.g., a right bottom corner of the touchscreen 151 shown in FIG. 3A 2) having a plurality of the previous function tools displayed thereon. In the example shown in FIG. 3A 2, the user may be able to check what kind of a function tool has been selected using the display of the selected function tool 313 displayed on the left top corner of the touchscreen 151.

Referring to FIG. 3A 2, while a plurality of the function tools are displayed on the right bottom end of the touchscreen 151, the user-selected function tool 313 is further displayed on the left top end of the touchscreen 151. Yet, as mentioned in the foregoing description of the lock-shaped button 340, while the lock-shaped button 340 is in the unlocked mode, if a prescribed function tool is selected from a plurality of the function tools, the display of a plurality of the function tools 311, 313, 315, 317, 319, 321 and 323 displayed on the right bottom end may be stopped. In this case, the display of the selected function tool 313 displayed on the left top end of the touchscreen 151 may enable the user to recognize the current function tool in an active state.

Although FIG. 3A 2 shows the example of identifying the function tool 313 selected by the user in a manner of displaying the user-selected function tool 313 on a prescribed region, other methods may be applicable as well as the method shown in FIG. 3A 2. For instance, referring to FIG. 3B 2 or FIG. 3C 2, the controller 180 gives a visual effect to a user-selected function tool, thereby enabling the user-selected function tool to become identifiable.

For instance, referring to FIG. 3B 2, the controller 180 controls the user-selected function tool 313 to be displayed in a manner of having a prescribed pattern (or a prescribed color) to be given thereto, thereby enabling the user-selected function tool 313 to become identifiable. Besides, the controller 180 differentiates an outline of the user-selected function tool 313 from that of another function tool, thereby controlling the user-selected function tool 313 to become identifiable.

For another instance, referring to FIG. 3C 2, the controller 180 controls the user-selected function tool 313 to be displayed in a manner of being protruded further than the rest of the function tools 311, 315, 317, 319, 321 and 323, thereby enabling the user-selected function tool 313 to become identifiable. On the other hand, the controller 180 may control the user-selected function tool 313 to be displayed in a manner of being dented further than the rest of the function tools 311, 315, 317, 319, 321 and 323, thereby enabling the user-selected function tool 313 to become identifiable [not shown in the drawing].

FIG. 3A 2, FIG. 3B 2 and FIG. 3C 2 show the examples of the method of identifying the function tool 313 selected by the user. Yet, it may be unnecessary for the identification of the user-selected function tool 313, which is shown in FIG. 3A 2, FIG. 3B 2 or FIG. 3C 2, to be linked to the layout of the corresponding function tool. For instance, despite the layout configured in a manner that 6 function tools are put in the quarter-circle shaped palette, it may be able to identify the function tools 311, 313, 315, 317, 319, 321 and 323 by applying the items described with reference to FIG. 3B 2 or FIG. 3C 2.

Moreover, by combining at least two of the function tool identifying methods shown in FIG. 3A 2, FIG. 3B 2 and FIG. 3C 2, it may be able to identify the user-selected function tool. For instance, while the user-selected function tool 313 is displayed on a prescribed region [cf. FIG. 3A 2], a prescribed pattern or color is applied to the user-selected function tool 313 [cf. FIG. 3B 2] or the user-selected function tool 313 may be controlled to be displayed in a manner of being further displayed than other function tools [cf. FIG. 3C 2].

In FIG. 3A 2, FIG. 3B 2 and FIG. 3C 2, for example, the function tools displayed on the touchscreen 151 may include a pipette pen 311 having a pipette image marked thereon, a capture pen 313, a share pen 315, a private pen 317, a highlighter pen 319, a draw pen 321 and an add pen 323. Regarding the above-enumerated function tools, the pipette pen 311 may be provided to extract a prescribed command or a prescribed color and the private pen 317, the highlighter pen 319 and the draw pen 321 may be understood as linked to the entry into the handwriting input mode. Moreover, the capture pen 313 and the share pen 315 may be understood as linked to the prescribed operations after the entry into the handwriting input mode or after the end of the handwriting input mode.

In the following description, the functions performed by the function tools shown in FIG. 3A 2, FIG. 3B 2 and FIG. 3C 2 are explained in detail.

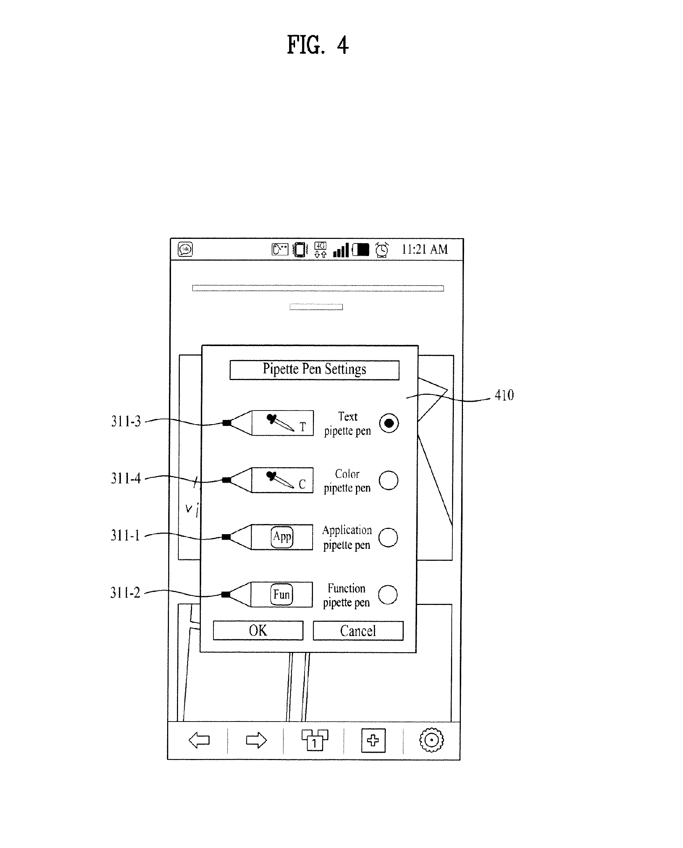

FIG. 4 is a diagram of display configuration for one example to describe an operation of a mobile terminal using pipette pens shown in FIGs. 3A to 3C.

Referring to FIG. 4, if a user selects the pipette pen 311 displayed on the touchscreen 151, the controller 180 may control a detailed operation setting menu 410 of the pipette pen 311 to be displayed on the touchscreen 151. From the detailed operation setting screen shown in FIG. 4, a user may be ale to select an item the user intends to extract using the pipette pen 311. For example, in the menu screen shown in FIG. 4, the pipette pen 311 may be set to one of an application (App) pipette pen 311-1, a function pipette pen 311-2, a text pipette pen 311-3 and a color pipette pen 311-4.

The application pipette pen 311-1 may be provided to extract an application activating command and the function pipette pen 311-2 may be provided to extract a command except the application activating command. Moreover, the text pipette pen 311-3 may be provided to extract a text string displayed on the touchscreen 151 and the color pipette pen 311-4 may be provided to extract a color value outputted from a prescribed point of the touchscreen 151.

An operation in accordance with the sub-setting of the pipette pen 311 shall be described in detail with reference to the accompanying drawings.

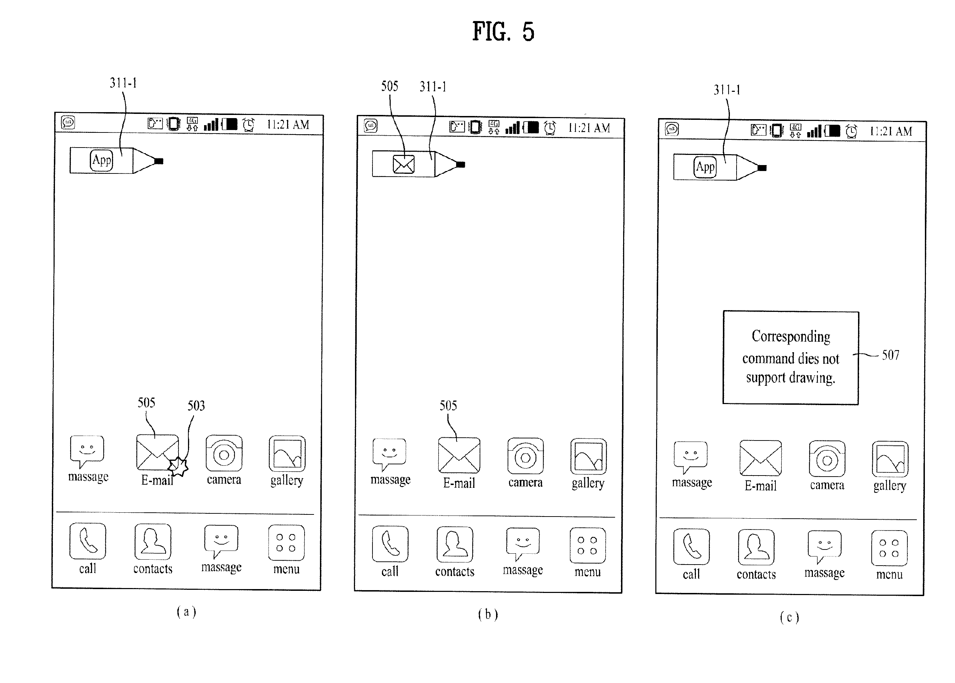

In the first place, in case that the pipette pen 311 is set to the application pipette pen 311-1, an operation of the mobile terminal 100 is described with reference to FIG. 5 as follows.

FIG. 5 is a diagram of display screen configuration for one example to describe an operation of a mobile terminal in case that a pipette pen is set to an application pipette pen.

Referring to FIG. 5 (a), while the pipette pen 311-1 is selected, if a touch input 503 is applied to an application activating icon displayed on the touchscreen 151, the controller 180 extracts an application activating command corresponding to the command provided by the selected application activating icon 505 and may control the extracted application activating command to be linked to the application pipette pen 311-1.

Since FIG. 5 (a) shows that the touch input is applied to an email application activating icon 505, the controller 180 may control the email application activating command to be linked to the application pipette pen 311-1. At the same time, the controller 180 may be able to control an application activating icon 505 (or a name of an application that becomes a target of the application activating command), to which the touch input is applied, to be displayed on the application pipette pen 311-1. For example, FIG. 5 (b) shows that the email application activating icon 505 is displayed on the pipette pen 311-1.

While the application activating command is not linked to the application pipette pen 311-1, if a touch input is applied to a point other than the point having the application activating icon displayed thereon, referring to FIG. 5 (c), the controller 180 may control an alarm message 507 to be outputted to indicate that the application activating command is not extractable from the touch input applied point.

After the application activating command has been linked to the application pipette pen 311-1, if a touch input is applied to the application pipette pen 311-1 or a random point of the touchscreen 151 by keeping the application pipette pen 311-1 selected, the controller 180 processes the application activating command linked to the application pipette pen 311-1 and may then control an activated screen of the corresponding application to be displayed on the touchscreen 151. Since FIG. 5 (a) shows that the email application activating command is linked to the application pipette pen 311-1, the controller 180 may be able to control the email application to be activated.

If the touch input applied point is a different application activating icon, the controller 180 does not process the application activating command linked to the application pipette pen 311-1 but is able to extract a new application activating command provided by a newly selected application activating icon. Thereafter, the controller 180 may control the new application activating command to be linked by replacing the application activating command previously linked to the application pipette pen 311-1.

As mentioned in the above description, by controlling the application activating command to be assigned to the application pipette pen 311-1, the controller 180 may have an advantage in activating a desired application via the application pipette pen 311-1 in an environment that fails to display an icon for activating the desired application.

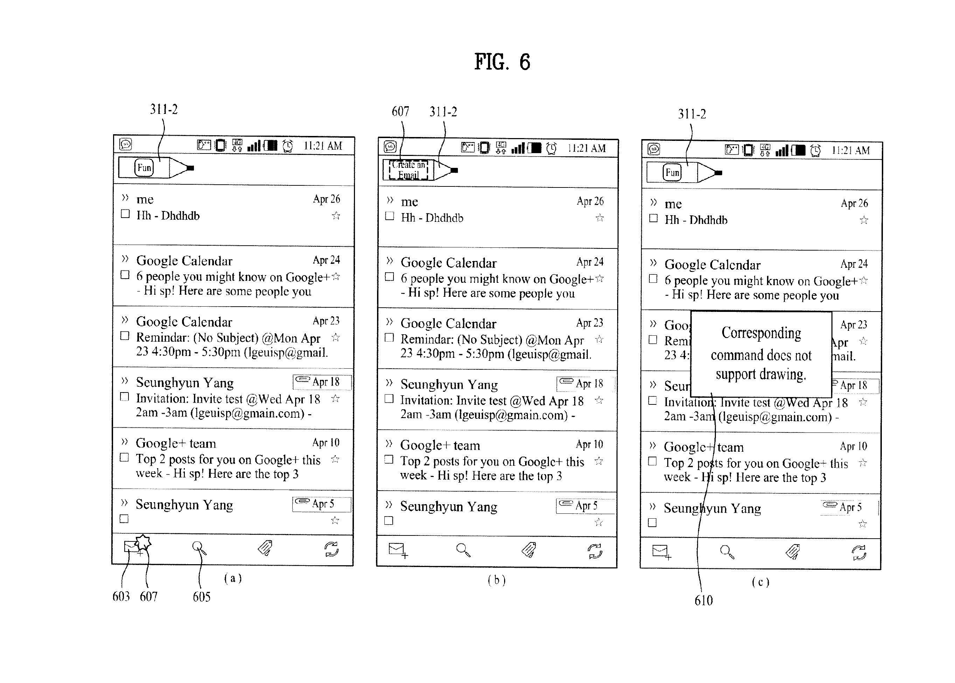

In the following description, in case that the pipette pen 311 is set to the function pipette pen 311-2, an operation of the mobile terminal 100 is explained with reference to FIG. 6.

FIG. 6 is a diagram of display screen configuration for one example to describe an operation of a mobile terminal in case that a pipette pen is set to a function pipette pen.

Referring to FIG. 6, a function pipette pen 311-2 is provided to extract a command other than an application activating command. For clarity of the following description, assume that an email application is in an active state. Referring to FIG. 6 (a), if an email application is activated, a function icon for providing simple manipulations of the email application may be displayed. For instance, in FIG. 6 (a), a first function icon 603 may provide a command for performing a new email creating function and a second function icon 605 may provide a command for performing a function of searching transmitted/received email items.

While a function pipette pen 311-2 is selected, if a touch input 607 is applied to a function icon displayed on the touchscreen 151 (e.g., FIG. 6 (a) shows one example that a touch input is applied to the 1^{st} function icon 603), the controller 180 extracts a command provided by the selected function icon 603 and may link the extracted command to the function pipette pen 311-2. Since FIG. 6 (a) shows that the touch input is applied to the first function icon 603 for performing the new email creating function, the controller 180 extracts a new email creating command and may then link the extracted command to the function pipette pen 311-2.

Simultaneously, the controller 180 may be able to control a description text of the command assigned to the touch input applied icon or the function pipette pen 311-2 to be displayed on the function pipette pen 311-2. For example, FIG. 6 (b) shows that 'Create an Email' is displayed as the description text of the command assigned to the function pipette pen 311-2.

After a prescribed command has been linked to the function pipette pen 311-2, if a touch input is applied to the function pipette pen 311-2 or a touch input is applied to a random point of the touchscreen 151 while the function pipette pen 311-2 is selected, the controller 180 may be able to process the command linked to the function pipette pen 311-2. Since FIG. 6 (a) shows an example that the new email creating command is linked to the function pipette pen 311-2, the controller 180 processes the new email creating command and may be then able to control a new email creating screen to be displayed.

If the touch input applied point is a different function icon, the controller 180 may be able to extract a new command provided by the newly selected function icon instead of processing the command linked to the function pipette pen 311-2. Thereafter, the controller 180 may control the new command to be linked to the function pipette pen 311-2 by replacing the previous command linked to the function pipette pen 311-2.

Yet, in case that a command related to a specific application is assigned to the function pipette pen 311-2, it may happen that the specific application should be activated in order to process the command linked to the function pipette pen 311-2. For instance, if an email application is not active, it may be unable to process the new email creating command in FIG. 6 (a). In order to process a prescribed command assigned to the function pipette pen 311-2, the controller 180 links the prescribed command and a command (e.g., an application activating command, etc.), which is supposed to precede for processing the prescribed command, to the function pipette pen 311-2, processes the command supposed to precede, and may be then able to control the prescribed command to be processed.

For another instance, the controller 180 may control a command linkable to the function pipette pen 311-2 to be limited to such a command commonly usable for most of applications as copy, paste, delete, new, save and the like. In case of attempting to assign a command other than the above-enumerated commands to the function pipette pen 311-2, referring to FIG. 6 (c), the controller 180 may be able to output an alarm message indicating that it is unable to assign the selected command to the pipette pen 311.

As mentioned in the foregoing description of the above examples, if the controller 180 controls a command other than an application activating command to be assigned to the function pipette pen 311-2, although a function icon for processing the same command assigned to the function pipette pen 311-2 is not displayed, it is advantageous in that a desired command can be processed.

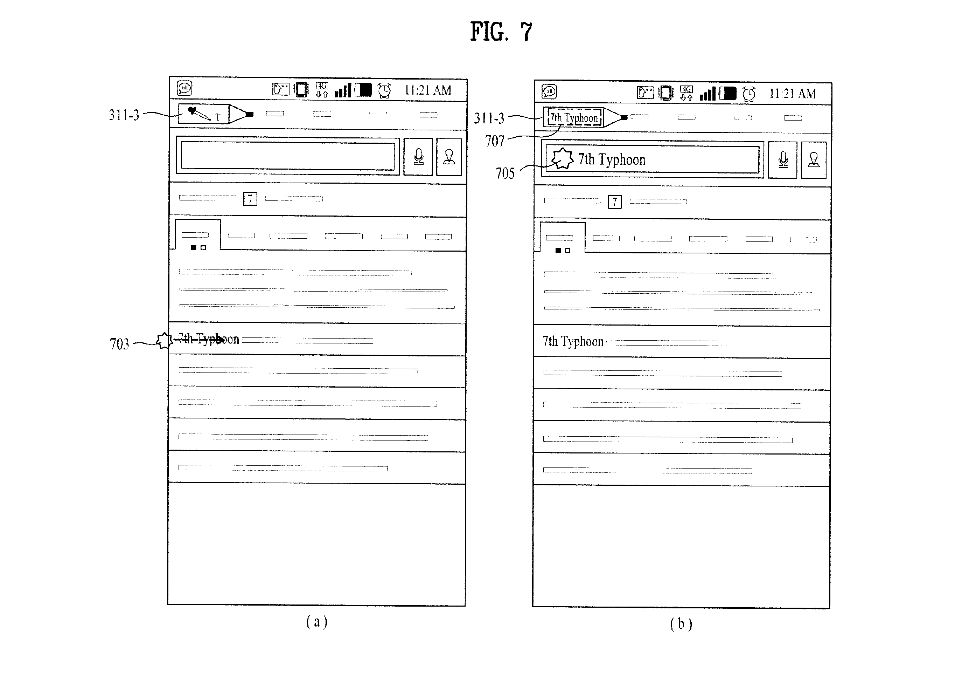

In the following description, in case that the pipette pen 311 is set to the text pipette pen 311-3, an operation of the mobile terminal 100 is explained with reference to FIG. 7.

FIG. 7 is a diagram of display screen configuration for one example to describe an operation of a mobile terminal in case that a pipette pen is set to a text pipette pen.

Referring to FIG. 7, while the text pipette pen 311-3 is selected, if a user input 703 is applied to a prescribed text string displayed on the touchscreen 151 (e.g., shone example that a drag action is performed on '7th Typhoon' displayed on the touchscreen 151), the controller 180 extracts the text string indicated by the user input 703 and may be then able to link the extracted text string to the text pipette pen 311-3. Once the text string is extracted, referring to FIG. 7 (b), the controller 180 may control the extracted text string 707 to be displayed on the text pipette pen 311-3.

Subsequently, referring to FIG. 7 (b), while the text pipette pen 311-3 is selected, if a user input 705 is applied to a part to which a user intends to attach the text string (e.g., FIG. 7 (b) shows one example that a touch input 705 is applied to the part to which the user intends to attach the text string), the controller 180 may be able to attach the text string linked to the text pipette pen 311-3 to a point indicated by the user input.

In particular, using the pipette pen 311 shown in FIG. 7, the user may be able to control the functions of copying and pasting the text string, which is displayed on the touchscreen 151, to be performed. Thus, it may be meaningful in that such a mobile terminal 100 failing to use the two-way input systems of mouse and keyboard like a computer is able to provide a feasible copy function and a feasible pate function.

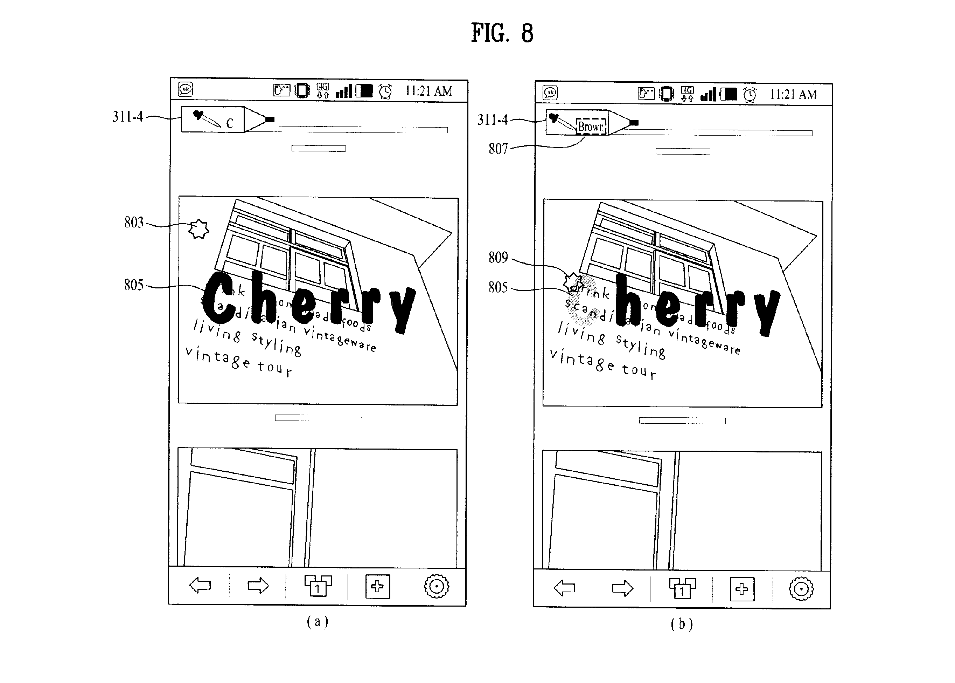

In the following description, in case that the pipette pen 311 is set to the color pipette pen 311-4, an operation of the mobile terminal 100 is explained with reference to FIG. 8.

FIG. 8 is a diagram of display screen configuration for one example to describe an operation of a mobile terminal in case that a pipette pen is set to a color pipette pen. For clarity of the following description, assume that a handwritten object 805 is displayed on the touchscreen 151.

Referring to FIG. 8, while the color pipette pen 311-4 is selected, if a touch input 803 is applied to a random point of the touchscreen 151, the controller 180 may be able to link a color, which is displayed on the touch input applied part, to the color pipette pen 311-4. Simultaneously, the controller 180 controls a temporarily saved color to be displayed on a clone image of the color pipette pen 311-4 (or the color pipette pen 311-4), thereby facilitating an extracted color to be recognizable via the color pipette pen 311-4. In particular, FIG. 8 (b) shows one example that the color linked to the color pipette pen 311-4 is represented as a text string 'brown' 807.

Thereafter, while the color pipette pen 311-4 is selected, if a touch input 809 is applied to an object 805 displayed on the touchscreen 151, the controller 180 may be able to adjust the color of the object 805 into the temporarily saved color.

For instance, in FIG. 4, after a setting screen for setting a detailed operation of the pipette pen 311 has been displayed, a user input is awaited. The detailed operation of the pipette pen 311 is then determined in response to the user input. Yet, it may be unnecessary for the detailed operation of the pipette pen 311 to be determined after a user's selection has been made.

For instance, the controller 180 may control the detailed operation of the pipette pen 311 to be determined in accordance with an object selected by a touch input performed after selection of the pipette pen 311. In particular, if the object selected in response to the touch input is an application activating icon, the controller 180 may control the pipette pen 311 to work as the application pipette pen 311-1. If the object selected in response to the touch input is a function icon, the controller 180 may control the pipette pen 311 to work as the function pipette pen 311-2. Moreover, if the object selected in response to the touch input is a text string, the controller 180 may control the pipette pen 311 to work as the text pipette pen 311-3. If there is no object selected in response to the touch input or an object other than the above-mentioned objects (e.g., the application icon, the function icon, the text string, etc.) is selected, the controller 180 may control the pipette pen 311 to work as the color pipette pen 311-4.

In continuation with the pipette pen 311, a function tool associated with a handwriting input mode entry among the function tools shown in FIG. 3A 2, FIG. 3B 2 and FIG. 3C 2 is described as follows.

First of all, as mentioned in the foregoing description, if one of the highlighter pen 319, the draw pen 321, the private pen 317, the capture pen 313 and the share pen 315 is selected from the function tools shown in FIG. 3A 2, FIG. 3B 2 and FIG. 3C 2, the controller 180 may be set to enter a handwriting input mode. Once the handwriting input mode is entered, the controller 180 may be able to control a handwritten object to be drawn on the touchscreen 151 in response to a user's touch input. In doing so, an attribute assigned to the selected function tool may be applied to the handwritten object drawn on the touchscreen 151.

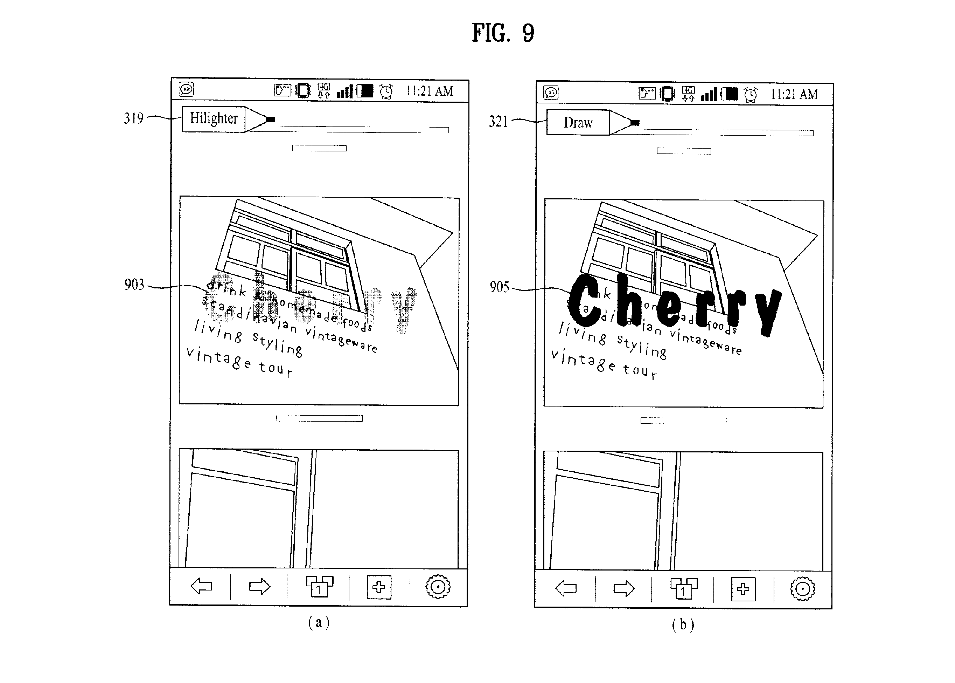

In the following description, a process for applying the attribute, which is assigned to the selected function tool, to the handwritten object shall be described in detail with reference to the operations of the draw pen 321 and the highlighter pen 319 shown in FIG. 9.

FIG. 9 is a diagram of display screen configuration for one example to describe a process for drawing a handwriting input by applying attributes assigned to a function tool. In particular, assume that the attributes assigned to the highlighter pen 319 include a first color and a first thickness in a semitransparent state like those of a marker. And, assume that the attributes assigned to the draw pen 321 include a second color and a second thickness in an opaque state like those of a fountain pen.

Referring to FIG. 9 (a), while the highlighter pen 319 is in an active state, if a user's touch input is applied, the controller 180 may control a handwritten object 903 to be drawn with a first color and a first thickness in a semi-transparent state.

Referring to FIG. 9 (b), while the draw pen 321 is in an active state, if a user's touch input is applied, the controller 180 may control a handwritten object 905 to be drawn with a second color and a second thickness in an opaque state.

In particular, referring to FIG. 9, the controller 180 may be able to control attributes of a function tool, which is selected to draw a handwritten object, to be applied to the handwritten object.

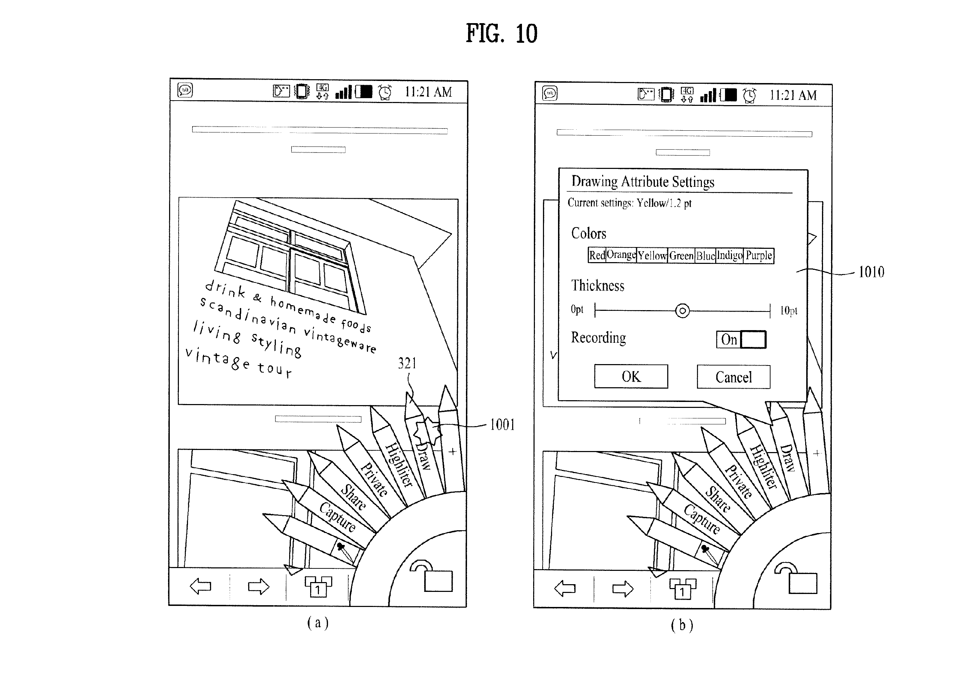

Meanwhile, such an attribute assigned to a function tool as a color, a thickness and the like is changeable rather than unchangeable in response to a user manipulation. This is described in detail with reference to FIG. 10 as follows.

FIG. 10 is a diagram of display screen configuration for one example to describe a process for manually changing attributes assigned to a function tool based on a user manipulation. For clarity of the following description, assume that attributes of the draw pen 321 are changed in FIG. 10. Besides, the following description with reference to FIG. 10 shall be exactly applicable to the highlighter pen 319, the private pen 317, the capture pen 313 and the share pen 315 [not shown in the corresponding drawings].

Referring to FIG. 10, if an appropriate touch input 1001 is applied to the draw pen 321 displayed on the touchscreen 151 (e.g., the draw pen 321 is long pressed) [FIG. 10 (a)], the controller 180 may control a setting menu 1010, which is provided to adjust attributes assigned to the draw pen 321, to be displayed [FIG. 10 (b)]. In particular, FIG. 10 (b) shows one example that a color and a thickness of the draw pen 321 are adjustable or changeable. Hence, a user may be able to adjust the attributes (e.g., color, thickness, etc.) of the draw pen 321 via the setting menu 1010 shown in FIG. 10 (b). If the attributes of the draw pen 321 are changed, the changed attributes may be applicable to a handwritten object drawn with the draw pen 321.

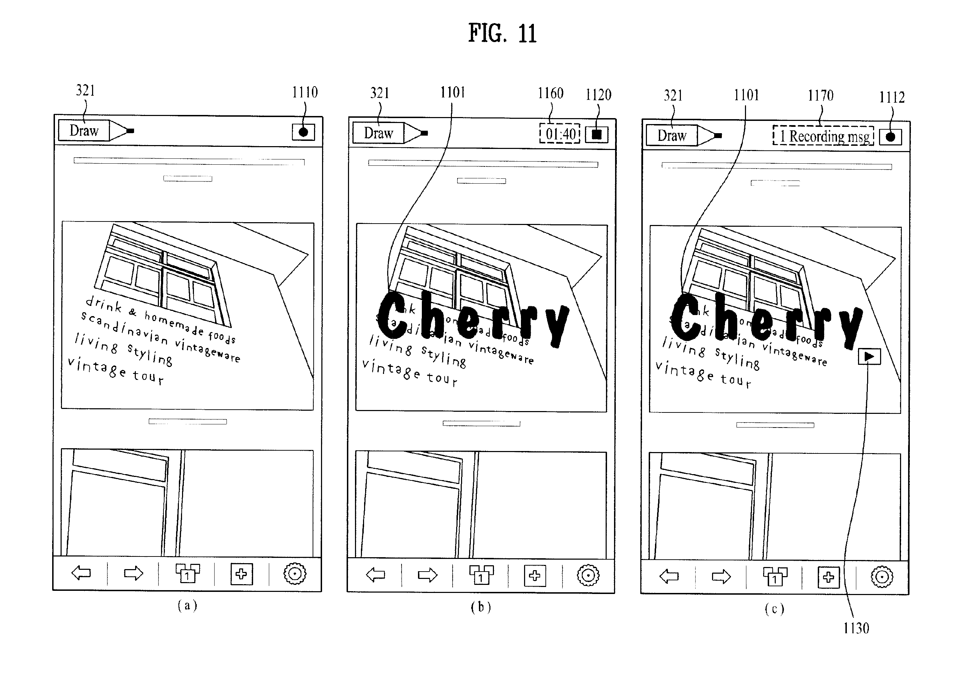

According to the setting menu shown in FIG. 10 (b), whether to activate a recording function can be adjusted using the draw pen 321 as well as the attributes (i.e., color and thickness) assigned to the draw pen 321. For instance, if the recording function is in an active state (i.e., on-state), the controller 180 may be able to establish an environment in which a voice recording can be executed simultaneously with (or separately from) drawing a handwritten object on the touchscreen 151. This is described in detail with reference to FIG. 11 as follows.

FIG. 11 is a diagram of display screen configuration for one example to describe a process for simultaneously performing a handwriting input and a voice recording using a function tool. For clarity of the following description, assume that both a handwriting input and a voice recording can proceed simultaneously using the draw pen 321 in FIG. 11. Besides, the following description with reference to FIG. 11 shall be exactly applicable to the highlighter pen 319, the private pen 317, the capture pen 313 and the share pen 315 [not shown in the corresponding drawings].

Referring to FIG. 11 (a), if a user selects the draw pen 321 for a handwriting input, the controller 180 controls s a handwriting input mode to be entered and also controls a recording button 1110 to be displayed to adjust whether to activate the microphone 122, at the same time. While the handwriting input mode is maintained, the controller 180 may be able to control an handwritten object 1101 to be drawn along traces of all touch inputs except a touch input for selecting the recording button 1110, a touch input for selecting a stop button 1120 [cf. FIG. 11 (b)], or a touch input for selecting a play button 1130 [cf. FIG. 11 (c)].

On the other hand, if the user applies a touch input to the recording button 1110 displayed on the touchscreen 151, referring to FIG. 11 (b), the controller 180 changes the recording button 1110 into the stop button 1120 and may be then able to control a voice recording to proceed by activating the microphone 122. Since the handwriting input mode continues in the course of the ongoing voice recording, the controller 180 may control a handwritten object 1101 to be drawn along the trace of the touch input applied to the touchscreen 151. In particular, the user controls the handwriting input to be inputted to the touchscreen 151 as soon as controls the voice recording to proceed. While the voice recording is proceeding, the controller 180 may be able to control a voice recording proceeding time 1160 to be further displayed on the touchscreen 151. In particular, FIG. 11 (b) shows one example that the voice recording proceeding time 1160 is displayed on the left side of the stop button 1120.

Thereafter, if a touch input is applied to the stop button 1120, the controller 180 may be able to control the voice recording to be ended by deactivating the microphone 122. Simultaneously, the controller stops displaying the stop button and may control the play button 1130 to be displayed to play a recorded audio file [FIG. 11 (c)]. In displaying the play button 1130, referring to FIG. 11 (c), the controller 180 may control the play button 130 to be situated at an end point of the handwritten object 1101, and more particularly, at an end portion of the handwritten object 1101.

If there is no handwritten object drawn on the touchscreen 151, the controller 180 may display the play button 1130 at the position (e.g., a top part of the touchscreen 151 shown in FIG. 11 (b)), at which the stop button 1120 used to be displayed, in a manner of replacing the stop button 1120.

Moreover, once the voice recording is ended, referring to FIG. 11 (c), the controller 180 may be able to control a recording button 1112 to be further displayed to enable a new voice recording to proceed. And, the controller 180 may be able to control the number of audio files, which are voice-recorded so far, to be further displayed on the touchscreen 151. For example, FIG. 11 (c) shows that the voice-recorded audio file number is displayed on the left side of the recording button 112.

Although FIG. 11 shows the example that the recording button 1110 and the stop button 1120 are displayed to adjust the activation and deactivation of the microphone 122, it may be unnecessary for the activation/deactivation of the microphone 122 to be adjusted using the corresponding button.

For instance, while a pointer continues the contact with the touchscreen 151 (i.e., while a touch input is applied), the controller 180 may control a voice recording to proceed by activating the microphone 122. If the contact between the pointer and the touchscreen 151 is cancelled (i.e., if the touch input is ended), the controller 180 may control the voice recording to be ended by deactivating the microphone 122. In doing so, a user may be able to simultaneously perform both a voice recording and a drawing of a handwritten object in a manner of drawing a desired trace by continuing the pointer contact.

For another instance, if the draw pen 321 is selected, the controller 180 may control a voice recording to start. If the draw pen 321 is reselected or the selection of the draw pen 321 is cancelled, the controller 180 may control the voice recording to be ended.

The descriptions mentioned with reference to FIG. 10 and FIG. 11 may be applicable to the highlighter pen 319, the private pen 317, the capture pen 313 and the share pen 315. In the following description, the differences among the draw pen 321, the private mode pen 317, the capture pen 313 and the share pen 315 are explained.

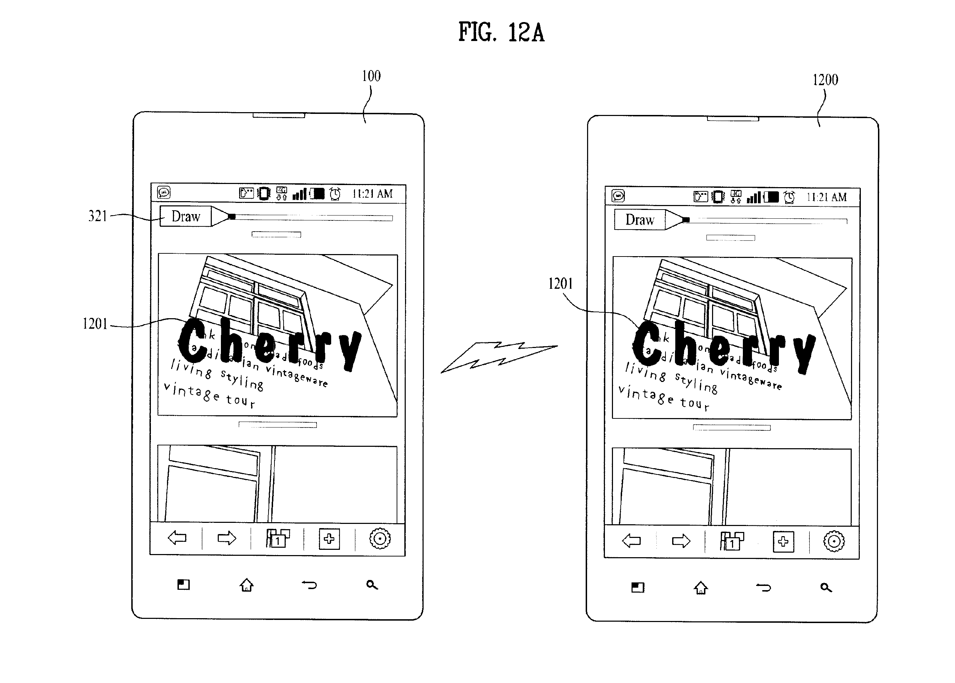

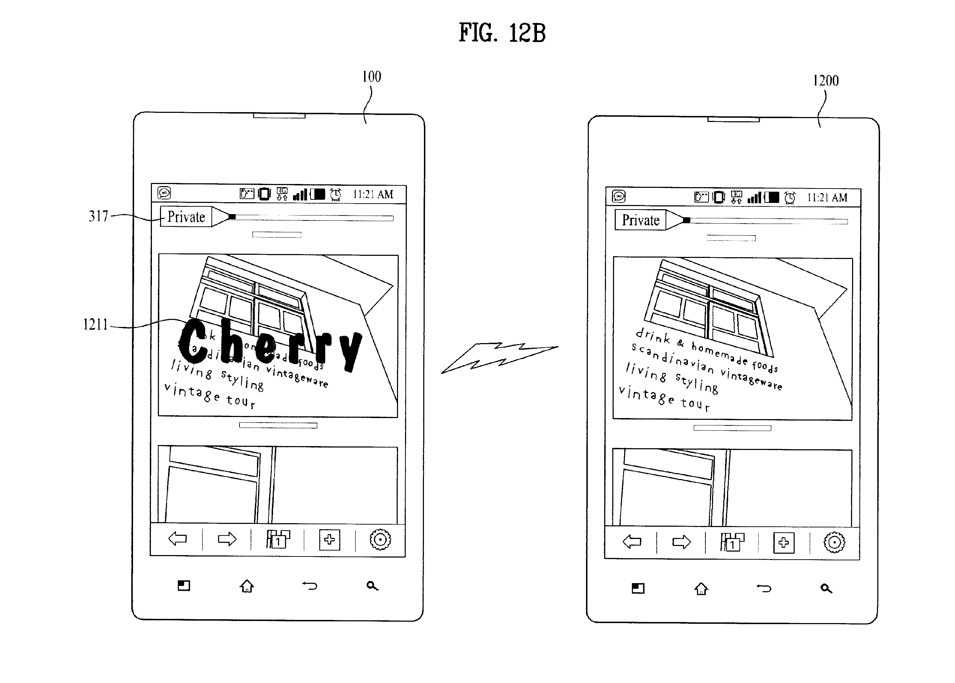

First of all, regarding the difference between the draw pen 321 and the private pen 317, in case that the mobile terminal 100 is set to share a screen with an external terminal, one handwritten object drawn via the draw pen 321 is provided to the external terminal but another handwritten object drawn via the private pen 317 may not be provided to the external terminal. This shall be described in detail with reference to FIG. 12 as follows.

FIG. 12A and FIG. 12B are diagrams of display screen configuration for one example to describe whether to display a handwritten object, which is drawn using a drawing pen and private pen, on an external terminal. In FIG. 12, assume that the mobile terminal 100 and the external terminal are set to share handwritten objects of their own with each other.

Referring to FIG. 12A, in case that a first handwritten object 1201 is drawn using the draw pen 321, the controller 180 may be able to control the first handwritten object to be displayed not only via the touchscreen 151 but also via an external terminal 1200. In particular, the controller 180 transmits a first handwriting layer, on which the first handwritten object 1201 is displayed, to the external terminal 1200, thereby controlling the first handwritten object 1201 to be displayed on the external terminal 1200.

On the other hand, referring to FIG. 12B, in case that a second handwritten object 1211 is drawn using the private pen 317, the controller 180 may control the second handwritten object 1211 to be drawn on the touchscreen 151 only and may also control the second handwritten object 1211 not to be displayed on the external terminal 1200.

In order to discriminate the first handwritten object 1201 drawn using the draw pen 321 and the second handwritten object 1211 drawn using the private pen 317 from each other, the controller 180 may be able to control the first handwritten object 1201 and the second handwritten object 1211 to be displayed on the first handwriting layer and a second handwriting layer different from the first handwriting layer, respectively. The controller 180 transmits the first handwriting layer to the external terminal 1200 only, thereby controlling the second handwritten object 1211 drawn using the private pen 317 not to be shared with the external terminal 1200.

According to the descriptions with reference to FIG. 3A 2, FIG. 3B 2 and FIG. 3C 2, the correlation between the draw pen 321 and the private pen 317 are explained only. Yet, it is a matter of course that the non-sharable attributes of the private pen 317 may be applicable to the highlighter pen 319, the capture pen 313 and the share pen 315. In case that a handwritten object drawn using the highlighter pen 319, the capture pen 313 or the share pen 315 is set not to be shared with the external terminal like the handwritten object drawn using the private pen 317, such a pen shall be named a private highlighter pen, a private capture pen or a private share pen.

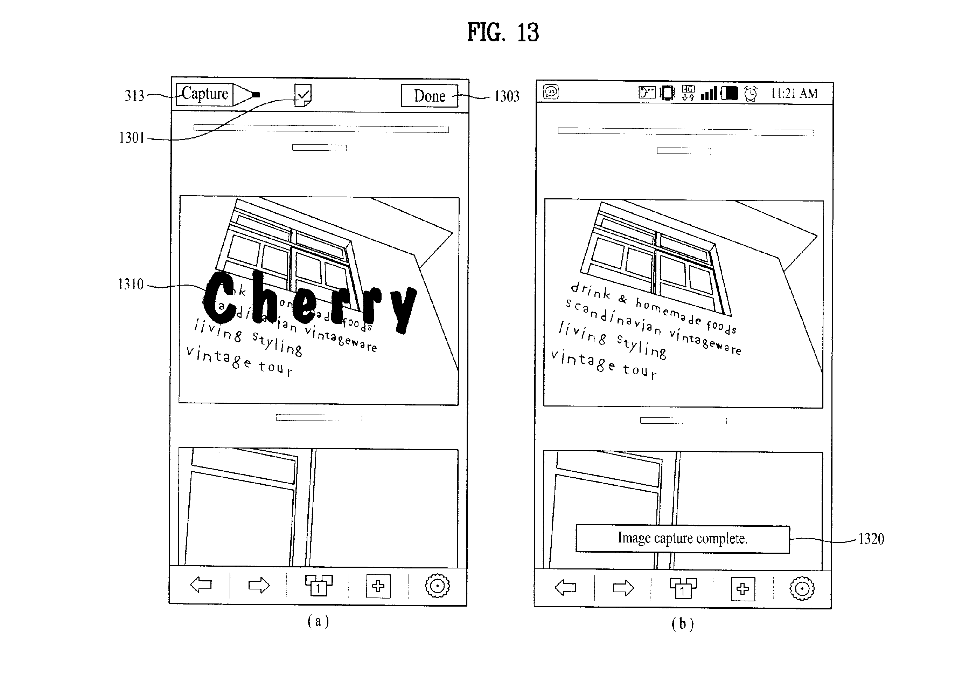

Regarding the differences between the draw pen 321 and the capture pen 313, the draw pen 321 and the capture pen 313 are identical to each other in drawing a handwritten object on the touchscreen 151 in a handwriting input mode. Yet, after the handwriting input mode has been ended, the capture pen 313 differs from the draw pen 321 in capturing a real-time output image displayed on the touchscreen 151. Functions of the capture pen 313 shall be described in detail with reference to FIG. 13 as follows.

FIG. 13 is a diagram of display screen configuration for one example to describe a process for capturing a real-time output image displayed on a touchscreen using a capture pen.

Referring to FIG. 13, if a user selects the capture pen 313, as mentioned in the foregoing description of the former case of the draw pen 321, the controller 180 controls a handwriting input mode to be entered and then enables the user to draw a handwritten object. Moreover, referring to FIG. 13 (a), the controller 180 may be able to control a complete button 'Done' 1303 and a display control button 1301 to be further displayed on the touchscreen 151. In this case, the complete button 'Done' 1303 is provided to end the handwriting input mode and the display control button 1301 is provided to adjust whether to display a handwritten object 1310 drawn on the touchscreen 151. If a recording function using the capture pen 313 is in an active state, a recording button (cf. FIG. 11) may be further displayed together with the complete button 'Done'.

While the handwriting input mode is maintained, if the user applies a touch input to the touchscreen 151, the controller 180 may be able to control the handwritten object 1310 to be drawn along a trace of the touch input. After the user has completed the handwriting action, if the user presses the complete button 'Done' 1303, the controller 180 ends the handwriting input mode and may be then able to capture a real-time output image displayed on the touchscreen 151. When the real-time output image displayed on the touchscreen 151 is captured, if the display control button 1301 is active, the controller 180 may control a capture image to be created in a manner of including the handwritten object 1310. On the other hand, while the display control button 1301 is in an inactive state, if the handwriting input mode is ended, the controller 180 may control a capture image to be created by excluding the handwritten object 1310.

In doing so, the capture image may be created in such a file format jpg, png, tif, bmp and the like. Once the capture image is created, referring to FIG. 13 (b), the controller 180 may be able to control an indication message 1320, which indicates that the image capture has been completed, to be displayed.

In particular, regarding the example shown in FIG. 13, if the handwriting input mode is completed, the capture pen 313 may be understood as provided to further perform a function of capturing a real-time output image (in which the handwritten object is included) displayed on the touchscreen 151.

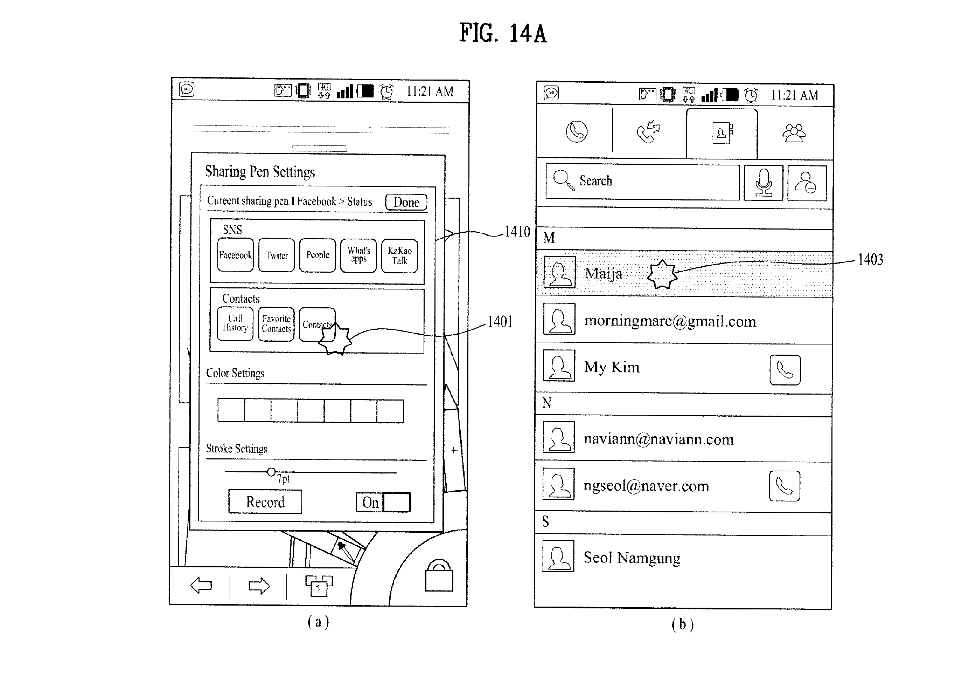

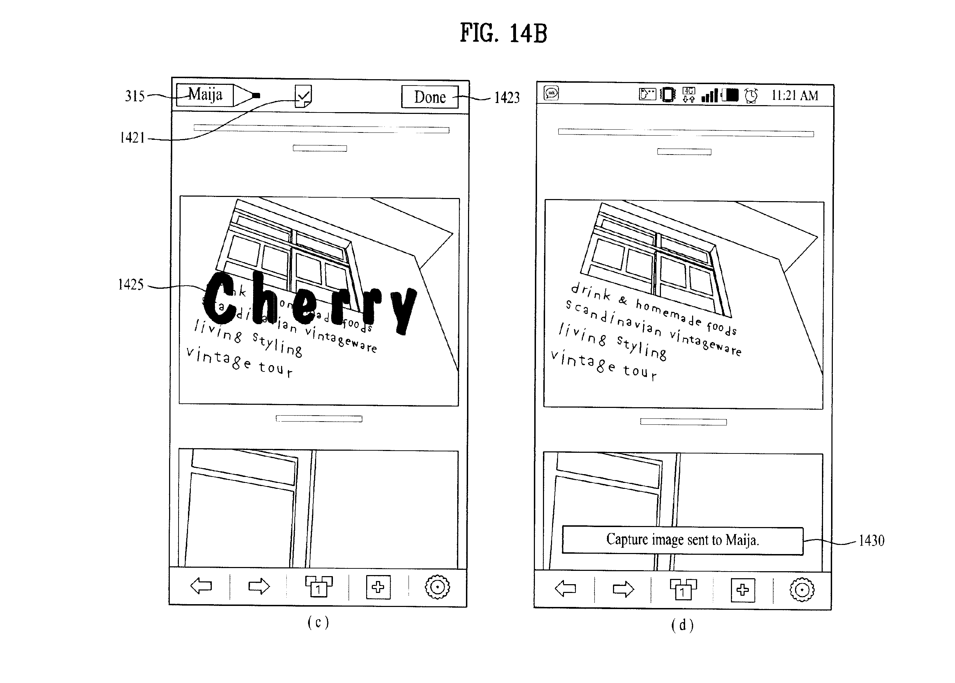

In the following description, the share pen 315 shown in FIG. 3A 2, FIG. 3B 2 or FIG. 3C 2 is explained in detail. First of all, the share pen 315 is identical to the draw pen 321 in enabling a handwritten object to be drawn on the touchscreen 151 after the entry into a handwriting input mode. Yet, the share pen 315 differs from the draw pen 321 in capturing a real-time output image displayed on the touchscreen 151 after the end of the handwriting input mode and then transmitting a created capture image to a prescribed account. Functions of the share pen 315 shall be described in detail with reference to FIG. 14 as follows.

FIGs. 14A to 14D are diagrams of display screen configuration for one example to describe an operation of a mobile terminal using a share pen.

Referring to FIG. 14A, if a user selects the share pen 315, the controller 180 may control a menu screen 1410 to be displayed. In this case, the menu screen 1410 enables a user to select an account with which a capture image created in the future will be shared. In the example shown in FIG. 14A, items sorted by 'SNS' are provided to select an account of a social network service (e.g., Facebook, Twitter, etc.) or an account of an IM (instant message) service (e.g., What's apps, Kakao, etc.). And, items sorted by 'Contacts' are provided to select phone numbers of external terminals. In setting a phone number of an external terminal to a transmission account, it may be able to use incoming/outgoing call records (Call History), a list of phone numbers set as favorites (Favorite Contacts), a phonebook list (Contacts) and the like.

For instance, if a phonebook list (Contacts) button is selected [1401] in the example shown in FIG. 14A, the controller 180 may be able to control a phonebook list saved in the memory 160 to be displayed [FIG. 14B]. A user is then able to select an account (e.g., phone number) of a counterpart, to which a capture image will be transmitted, by referring to the phonebook list displayed on the touchscreen 151. For example, FIG. 14B shows that 'Maija' is selected [1403].

Once the account of the counterpart, to which the capture image will be transmitted, is selected, the controller 180 enters a handwriting input mode and is then able to control the user to draw a handwritten object 1425. Moreover, referring to FIG. 14 (a), the controller 180 may be able to control a complete button 'Done' 1423 and a display control button 1421 to be further displayed on the touchscreen 151. In this case, the complete button 'Done' 1423 is provided to end the handwriting input mode and the display control button 1421 is provided to adjust whether to display a handwritten object drawn on the touchscreen 151. Simultaneously, the controller 180 may be able to control an account (e.g., Maija in FIG. 14C) of a counterpart, with whom a capture image created in the future will be shared, to be further displayed on the share pen 315. In the example shown in FIG. 14A, if a recording function using the share 315 is in an active state, a recording button (cf. FIG. 11) may be further displayed.

While the handwriting input mode is maintained, if the user applies a touch input to the touchscreen 151, the controller 180 may be able to control a handwritten object 1425 to be drawn along a trace of the touch input. After the user has completed the handwriting action, if the user presses the complete button 'Done' 1423, the controller 180 ends the handwriting input mode and may be then able to capture a real-time output image displayed on the touchscreen 151. If a capture image generated from capturing the real-time output image displayed on the touchscreen 151 is created, the controller 180 may be able to control the wireless communication unit 110 to transmit the capture image to the selected counterpart account.

While the display control button 1421 is active, if the handwriting input mode is ended, the handwritten object 1425 may be included in the capture image transmitted to the account of the counterpart. On the other hand, while the display control button 1421 is inactive, if the handwriting input mode is ended, the handwritten object 1425 may not be included in the capture image transmitted to the account of the counterpart.

Moreover, in case that a voice recording proceeds as well using the share pen 315, the controller 180 may control a recording file to be transmitted to the account of the counterpart together with the capture image.

If the transmission of the capture image (and the recording file) to the account of the counterpart is completed, referring to FIG. 14D, the controller 180 may be able to control an indication message 1430, which indicates that the transmission of the capture image (and the recording file) to the account of the counterpart has been completed, to be displayed.

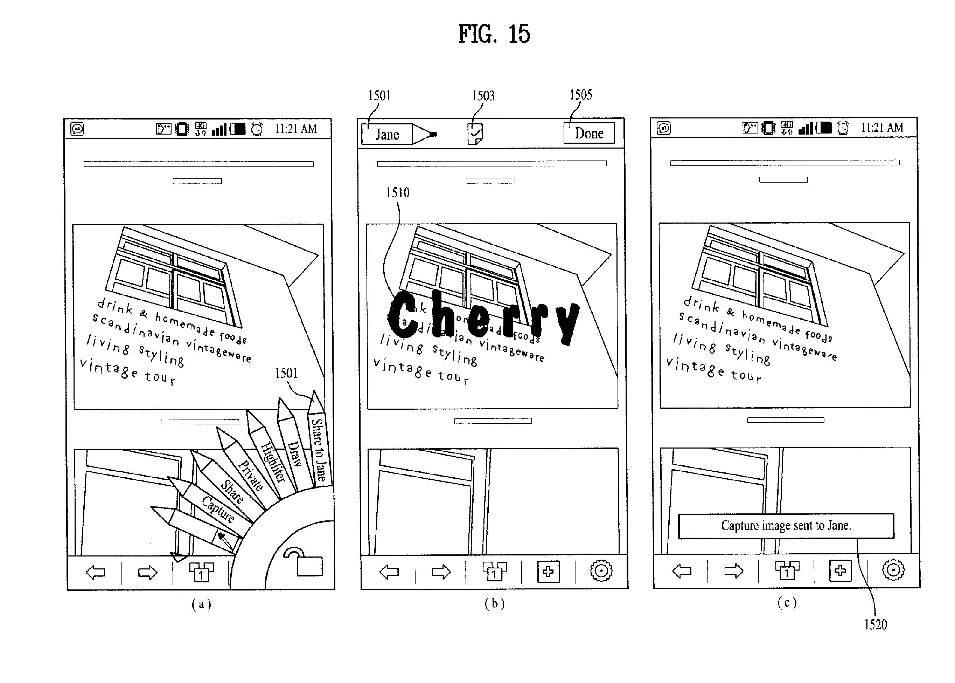

According to the example shown in FIG. 14, after the share pen 315 has been selected, the user is able to select an account to which a capture image will be transmitted. Instead, the controller 180 may be able to transmit the capture image to an account designated by the share pen 315 without waiting for a user's manipulation. In particular, a series of the steps described with reference to FIG. 14A and FIG. 14B may be skipped. For instance, in case that the share pen 315 to which an account for transmitting a capture image thereto is previously assigned is selected, the controller 180 may be able to control the wireless communication unit 110 to transmit the capture image to the account assigned to the share pen 315. This is described in detail with reference to FIG. 15 as follows.

FIG. 15 is a diagram of display screen configuration for one example of a process for transmitting a captured image to an account designated by a share pen without waiting for a user input. In the example shown in FIG. 15 (a), assume that a phone number of a counterpart having a name 'Jane' on a phonebook list is assigned to a share pen 1501 having 'Share to Jane' inscribed thereon. If the share pen 1501 having 'Share to Jane' inscribed thereon is selected, the controller 180 may be able to control a handwriting input mode to be entered without a step of selecting an account of a counterpart with which a future-created capture image will be shared. Thereafter, if the handwriting input mode is ended (e.g., a complete button 'Done' 1505 is touched), the controller 180 may be able to control the capture image to be transmitted to an account of Jane, and more particularly, to a phone number of Jane, for which an indication message 1520 shown in FIG. 15 (c) can be referred to. As mentioned in the foregoing description with reference to FIG. 14, if a display control button 1503 is in an active state, the controller 180 will create a capture image including a handwritten image 1510. If the display control button 1503 is in an inactive state, the controller 180 may create the capture image from which the handwritten object 1510 is excluded.

Although the pipette pen 311, the highlighter pen 319, the draw pen 321, the private pen 317, the capture pen 313, the share pen 315 and the like are displayed in FIG. 3A 2, FIG. 3B 2, or FIG. 3C 2, functions tools may be displayed more or less. For instance, if there exists a function tool failing to be displayed on the touchscreen 151, referring to FIG. 3A 2, the controller 180 may control a scroll arrow 309 to be displayed to display the function tool failing to be displayed on the touchscreen 151. In order to display the function tool failing to be displayed on the touchscreen 151, a user may be able to select the scroll arrow 309.

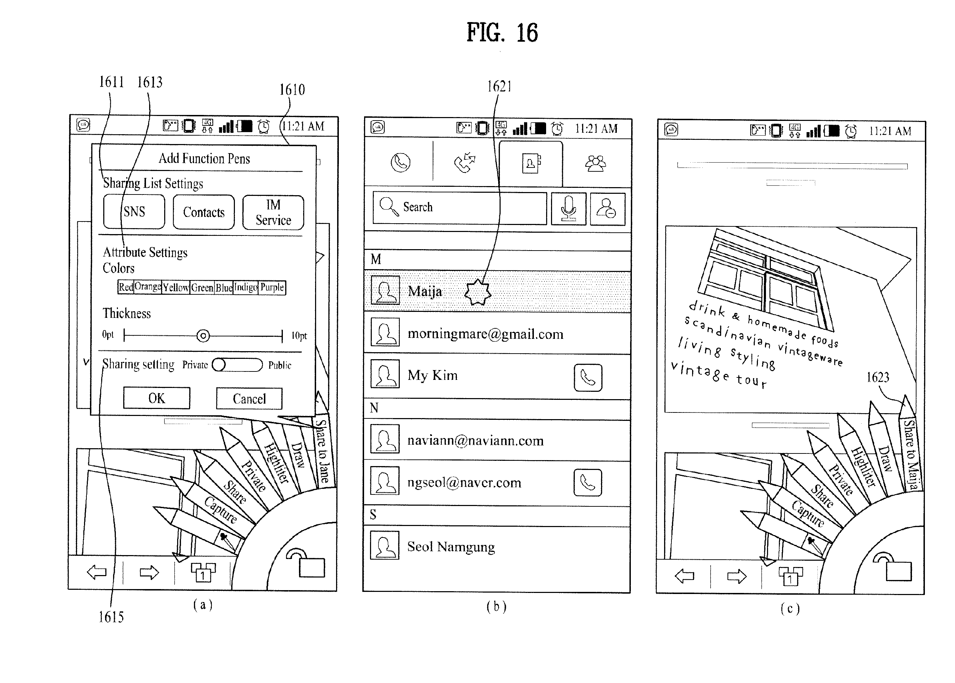

Besides, a user may be able to control a new function tool to be further included in addition to the aforementioned function tools using the add pen 323. This is described in detail with reference to FIG. 16 as follows.

FIG. 16 is a diagram of display screen configuration for one example to describe a process for adding a new function tool to a touchscreen using an add pen.

Referring to FIG. 16, if a user selects the add pen 323 having '+' inscribed thereon, the controller 180 may be able to display a setting menu 1610 for designating draw pen attributes to add [FIG. 16 (a)]. In the example shown in FIG. 16 (a), an item 'Share item settings' 1611 is provided to determine whether to add the share pen 315 and 'attribute settings' 1613 may be provided to designate attributes of a function tool to be newly added. Moreover, a toggle key displayed on a share setting 1615 may be provided to create the private pen 319.

An item 'None' in 'Share list settings' may be provided to set a function tool to such a function tool having a drawing function only as the draw pen 321, the highlighter pen 319, the private pen 317 and the like. Moreover. 'SNS' or 'Contacts' in 'Share list settings' may be provided to create the share pen 315 linked to an account of a specific counterpart like the former share pen 315 described with reference to FIG. 15. For instance, if the button 'Contacts' is selected in the example shown in FIG. 16 (a), the controller 180 may be able to control a phonebook list saved in the memory 160 to be displayed [FIG. 16 (b)]. If a user selects a specific counterpart from the phonebook list [162], referring to FIG. 16 (c), the controller 180 may be able to control a new share pen 1623, to which an account (e.g., a phone number, etc.) of the selected counterpart (e.g., 'Maija' selected in FIG. 16 (b)), to be created.

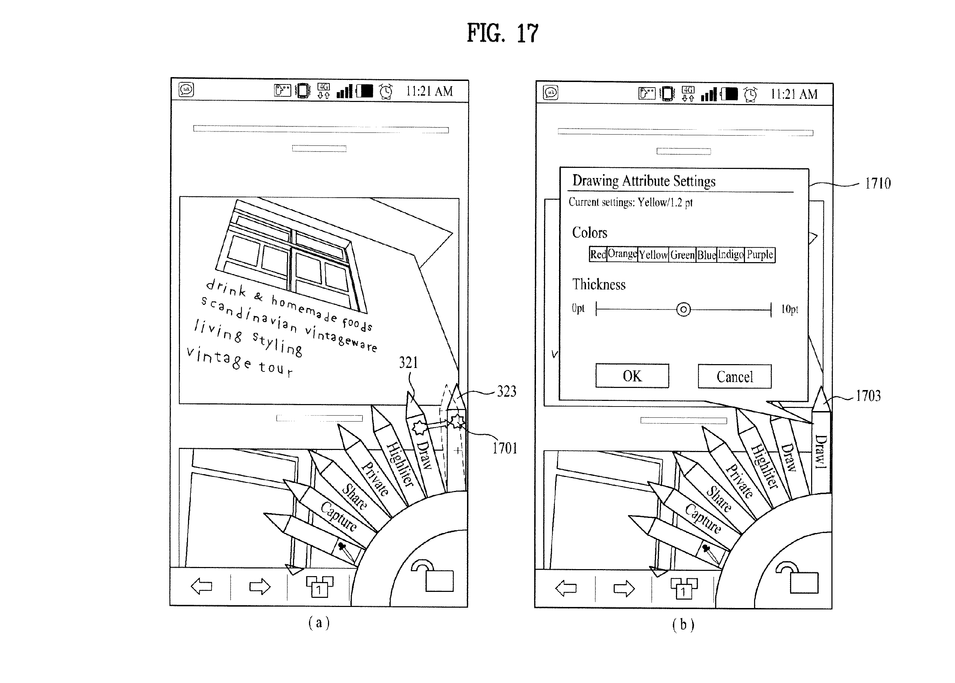

FIG. 16 shows the example that a new function tool is added if a user selects the add pen 323. Alternatively, a new function tool may be added in different ways. This is described in detail with reference to FIG. 17 as follows.

FIG. 17 is a diagram of display screen configuration for another example for adding a new function tool.

Referring to FIG. 17 (a), if at least one of the function tools displayed on the touchscreen 151 is dragged to the add pen 323, the controller 180 may control a function tool, which is capable of performing the same function of the dragged function tool, to be added. In doing so, the newly added function tool may be adjusted to have attributes different from those of the former function tool.

For instance, if the draw pen 321 is dragged to the add pen 323 [FIG. 17 (a)], the controller 180 may control a new draw pen 'Draw 1' 1703, which performs the same function of the draw pen 321, to be additionally displayed [FIG. 17 (b)]. In doing so, in order to prevent the new function tool from having the same attributes or the same setting values of the original function tool, referring to FIG. 17 (b), the controller 180 may be able to display a setting menu 1710 for adjusting attributes of the new function tool.

Alternatively, the controller 180 controls random attributes or setting values, which are different from those of the original function tool, to be automatically assigned to the new function tool, thereby preventing the attributes or setting values of the new function tool from overlapping with those of the original function tool. For instance, a color assigned to the newly added draw pen 1703 follows a color similar to that of the original draw pen 321 but has a tone thicker than that of the original draw pen 321, whereby the attribute overlapping between the new draw pen 1703 and the original draw pen 321 can be prevented.

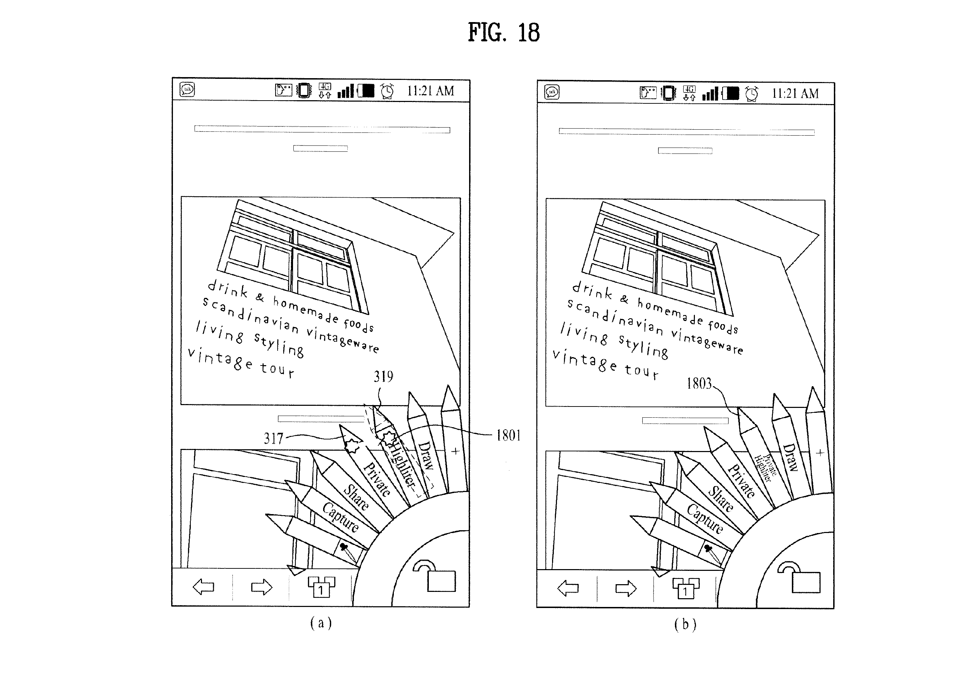

According to the above description, a handwritten object drawn using one of the draw pen 321, the highlighter pen 319, the capture pen 313 or the share pen 315 may be set to be shared with an external terminal unlike a handwritten object drawn using the private pen 317. Yet, a handwritten object drawn using one of the draw pen 321, the highlighter pen 319, the capture pen 313 or the share pen 315 may be set not to be shared with an external terminal. This is described in detail with reference to FIG. 18 as follows. For clarity of the following description with reference to FIG. 18, assume that a handwritten object drawn via the highlighter pen 319 is set not to be shared with an external terminal.

FIG. 18 is a diagram of display screen configuration for one example to describe a process for changing a highlighter pen into a private highlighter pen.

Referring to FIG. 18, if the private pen 317 is dragged to the highlighter pen 319 [FIG. 18 (a)], the controller 180 may be able to change the highlighter pen 319 into a private highlighter pen 1803 [FIG. 18 (b)]. A handwritten object drawn using the private highlighter pen 1803 may be set not to be shared with an external terminal as is the same case of the private pen 317.

Although the highlighter pen 319 is representatively described with reference to FIG. 18, if the private pen 317 is dragged to the capture pen 313, the capture pen 313 may be set to a private capture pen. Moreover, if the private pen 317 is dragged to the share pen 315, the share pen 315 may be set to a private share pen. For clarity of the following description, a handwriting input mode for drawing a handwritten object sharable with an external terminal shall be named a first handwriting input mode and a handwriting input mode for drawing a handwritten object non-sharable with an external terminal shall be named a second handwriting input mode. In particular, a handwriting input mode entered in response to a selection of one of the draw pen 321, the highlighter pen 319, the capture pen 313, the share pen 315 and the like is assumed as a first handwriting input mode. And, a handwriting input mode entered in response to a selection of one of the private pen 317, the private highlighter pen, the private capture pen, the private share pen and the like is assumed as a second handwriting input mode.

Prior to describing operations of the mobile terminal 100 according to the present invention, the function tools available for controlling the operations of the mobile terminal 100 according to the present invention have been described with reference to FIGs. 3 to 18. Now, in the following description, a method of sharing a handwriting input of the mobile terminal 100 using the above-mentioned function tools according to the present invention is explained in detail with reference to the accompanying drawings.

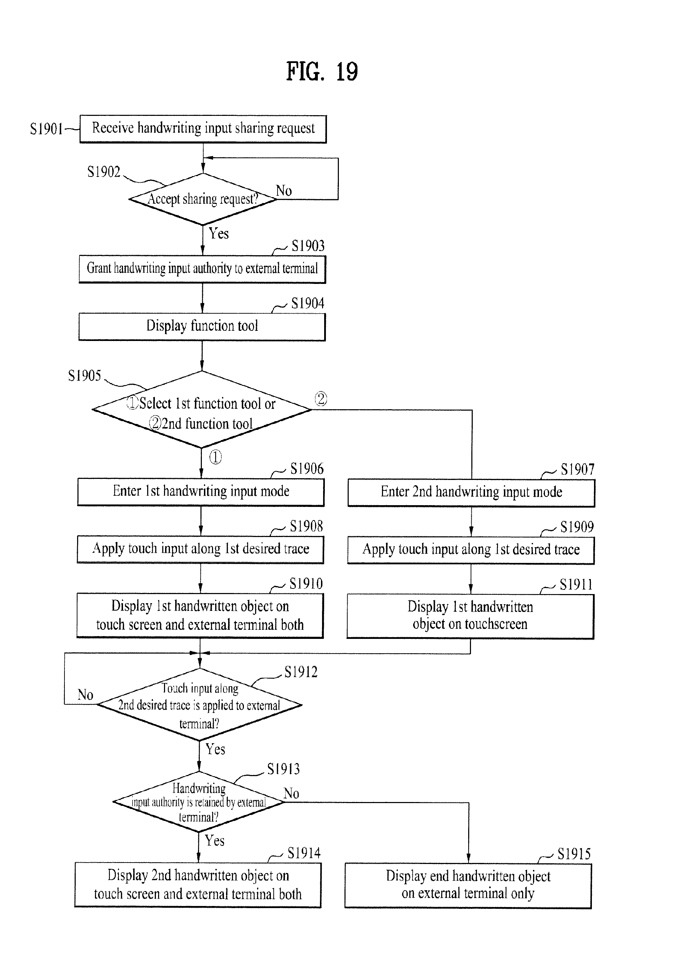

FIG. 19 is a flowchart for a method of sharing a handwriting input in a mobile terminal according to one embodiment of the present invention. Although a handwritten object drawn in a first handwriting input mode and a handwritten object drawn in a second handwriting input mode are defined in FIG. 12 as a first handwritten object and a second handwritten object, respectively, an object drawn via the touchscreen 151 of the mobile terminal 100 and a handwritten object drawn via an external terminal shall be defined in FIG. 19 as a first handwritten object and a second handwritten object, respectively.

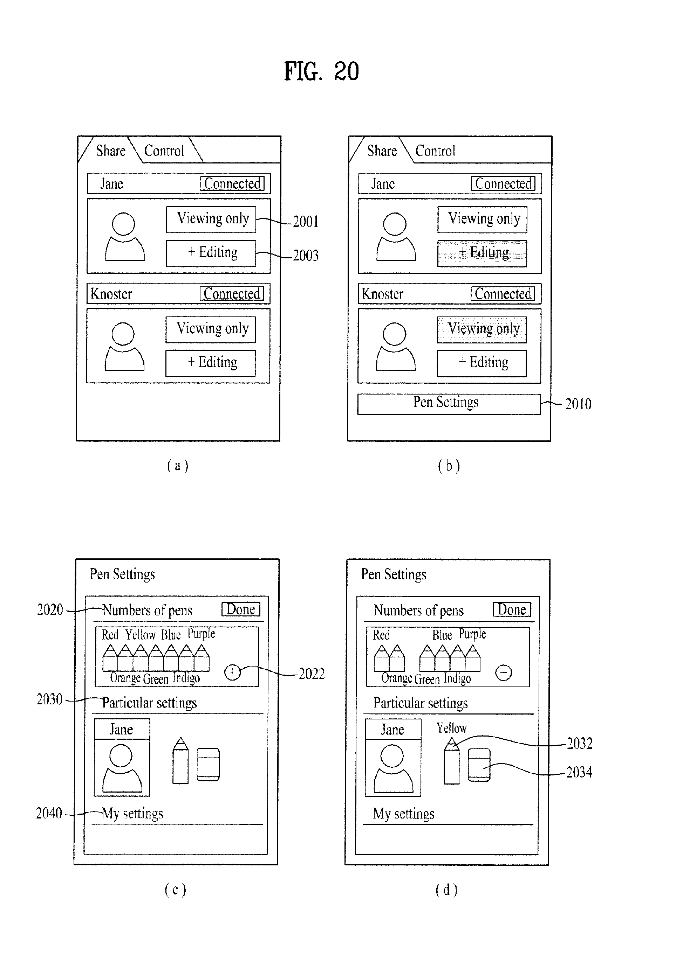

Referring to FIG. 19, if a handwriting input sharing request is received from an external terminal [S1901], the mobile terminal 100 may be able to determine whether to share a handwriting input with the external terminal based on a user input [S1902]. In case that the handwriting input is set to be shared with the external terminal, the controller 180 of the mobile terminal 100 set to a host may be able to set up a presence or non-presence of an handwriting input authority of the external terminal [S1903]. In this case, the presence or non-presence of the handwriting input authority is provided to set up whether a handwriting input of an external terminal will be shared with the mobile terminal 100 or not. The setting of the presence or non-presence of the handwriting input authority is described in detail with reference to FIG. 20 as follows.

FIG. 20 is a diagram of display screen configuration for one example of setting a presence or non-presence of a handwriting input authority of an external terminal set to share a handwriting input.

Referring to FIG. 20, external terminals set to share handwriting inputs with the mobile terminal 100 may include Jane's terminal and Knoster's terminal. If an external terminal to share a handwriting input with the mobile terminal 100 is selected, the controller 180 may control a screen to be displayed to determine a presence or non-presence of a handwriting input authority [FIG. 20 (a)]. In the example shown in FIG. 20 (a), a button 'Viewing only' 2001 is provided not to grant the handwriting input authority to the external terminal. And, a button 'Editing' 2003 is provided to grant the handwriting input authority to the external terminal.

The mobile terminal 100 may be able to simultaneously display both a handwritten object drawn on the touchscreen 151 and a handwritten object drawn in the external terminal (e.g., Jane's terminal shown in FIG. 20 (b)) having the handwriting input authority granted thereto. On the other hand, a handwritten object drawn in the external terminal (e.g., Knoster's terminal shown in FIG. 20 (b)) having the handwriting input authority not granted thereto is only displayed on the external terminal having the handwriting input authority not granted thereto but may be set to be displayed on the mobile terminal 100.

In particular, referring to FIG. 20, the controller 180 receives a handwritten object from the Jane's terminal and may control both of the received handwritten object and the handwritten object drawn in the mobile terminal 100 to be simultaneously displayed on the touchscreen 151.

In case of granting the handwriting input authority to an external terminal, the controller 180 may be able to set up a color of the handwritten object, which is received from the external terminal and is going to be displayed on the touchscreen 151, based on a user input. For instance, referring to FIG. 20 (b), if a handwriting input authority is granted to an external terminal, the controller 180 may control a pen setting button 'Pen Settings' 2010, which is provided to set up a color of a handwritten object from the handwriting input authority granted external terminal, to be activated. In the example shown in FIG. 20 (b), if the pen setting button 2010 is selected, referring to FIG. 20 (c), the controller 180 may be able to control a pen setting menu screen, which is provided to set up a color of a handwritten object from an external terminal, to be displayed.

In the example shown in FIG. 20 (c), an item 'Number of pens' 2020 may indicate the number of colors that can be assigned to an external terminal. FIG. 20 (c) shows on example that 7 pens differing from one another in color are situated at the item 'Number of pens' 2020. If a user selects a prescribed pen from the 7 pens in different colors displayed on the item 'Number of pens' 2020, the controller 180 may be able to control the selected color to be assigned to the external terminal. Subsequently, the controller 180 may be able to control the handwritten object, which is received from the external terminal having the handwriting input authority, to be represented in the assigned color.

For instance, referring to FIG. 20 (c), if yellow is assigned to the Jane's terminal, the controller 180 may be able to control a handwriting input, which is received from the Jane's terminal, to be displayed in yellow.

In the example shown in FIG. 20 (c), the controller 180 may control the same color not to be duplicatively assigned to external terminals. For instance, if a first color is assigned to a first external terminal, the first color cannot be assigned to a second external terminal. Instead, a color different from the first color should be assigned to the second external terminal. Since FIG. 20 (c) shows one example that 7 kinds of colors can be assigned to external terminal, it may be able to assign different colors to 7 terminals, respectively.

Yet, the number of the pens shown in FIG. 20 (c) may not mean the maximum number of external terminals to which the handwriting input authority can be granted. Even if the number of the handwriting input authority granted external terminals is greater than that of the assignable colors (e.g., '7' in FIG. 20 (c)), more colors can be assigned to an external terminal via an add button 2033 shown in FIG. 20 (c).

In case that the number of the handwriting input authority granted external terminals is greater than that of the assignable colors, the controller 180 may be able to only receive a handwritten object from the external terminal that preoccupies the corresponding color. The controller 180 may control a handwritten object, which is inputted from an external terminal failing to have a color assigned thereto, not to be displayed via the mobile terminal 100 until a color returned by another external terminal is assigned.

In doing so, the return of the color assigned to the external terminal may be automatically performed in response to a prescribed event occurrence in the external terminal. For instance, in one of a case that the external terminal stops sharing the handwriting input with the mobile terminal 100, a case that a call signal is received by the external terminal in the course of the handwriting input sharing, a case that an application having nothing to do with the handwriting input sharing is activated in the external terminal in the course of the handwriting input sharing, and the like, the controller 180 may be able to control the color assigned to the external terminal to be returned. Moreover, in case that a user of the mobile terminal 100 makes a request for stopping the handwriting input sharing with a specific external terminal, the color assigned to the specific external terminal may be returned.

In the example shown in FIG. 20 (c), an item 'Particular settings' 2030 is provided to indicate a color assigned to an external terminal to which a handwriting input authority is granted. And, an item 'My settings' 2040 is provided to indicate a color of a handwritten object drawn in the mobile terminal 100. When a handwriting input authority is granted to an external terminal, if there is no function tool selected by a user of the mobile terminal 100 does not exist, referring to FIG. 20 (c), the item 'My settings' 2040 may remain blank.

A pen icon 2032 in the item 'Particular settings' 2030 may be usable to indicate a color assigned to an external terminal. For instance, referring to FIG. 20 (d), if yellow is assigned to the Jane's terminal, the controller 180 may be able to control the pen icon 2032 to have a yellow color. Moreover, an eraser icon 2034 in the item 'Particular settings' 2030 may be usable to determine whether to grant an erasing authority to the external terminal as well as a drawing authority. In the examples shown in FIG. 20C and FIG. 20D, if the eraser icon 2034 is displayed on the item 'Particular settings' 2030, it may be understood as granting the erasing authority to the external terminal as well as the drawing authority. In particular, it may be understood that the Jane's terminal has the authority of erasing the 2^{nd} handwritten object as well as the authority of creating the 2^{nd} handwritten object.

In case that the handwriting input authority is granted to a plurality of external terminals, in order to prevent colors given to the external terminals from overlapping with each other, referring to FIG. 20 (d), the controller 180 may control a position, at which the pen of the color assigned to the external terminal used to be situated, to be displayed as a vacant position. If the handwriting input authority granted external terminal ends the handwriting input sharing with the mobile terminal 100, the pen of the color assigned to the external terminal may return to its original position.

In the example shown in FIG. 20 (d), since a yellow color is assigned to the Jane's terminal having the handwriting input authority granted thereto, a handwritten object received from the Jane's terminal may be displayed on the mobile terminal 100 in a manner of having the yellow color. Thereafter, if a user selects a complete button 'Done', the controller 180 may be able to complete the color settings of the external terminal having the handwriting input authority granted thereto.

Referring now to FIG. 19, if the settings of the presence or non-presence of the handwriting input authority granted to the external terminal are completed, the controller 180 may be able to control the function tools shown in FIG. 3 to be displayed based on a user input [S1904]. Subsequently, if the user selects a function tool for a handwriting input from the function tools shown in FIG. 3 [S1905], the controller 180 may be able to enter a handwriting input mode. In doing so, a handwriting input mode, which is entered by selecting such a first function tool capable of sharing a handwritten object with an external terminal as one of the highlighter pen 319, the draw pen 321, the capture pen 313 and the share pen 315 among the function tools shown in FIG. 3, shall be named a first handwriting input mode. And, a handwriting input mode, which is entered by selecting such a second function tool incapable of sharing a handwritten object with an external terminal as one of a private highlighter pen, the private pen 321, a private capture pen and a private share pen, shall be named a second handwriting input mode.

In particular, if the first function tool is selected from the function tools displayed on the touchscreen 151, the controller 180 may be able to control the first handwriting input mode to be entered [S1906]. On the other hand, if the second function tool is selected from the function tools displayed on the touchscreen 151, the controller 180 may be able to control the second handwriting input mode to be entered [S1907].

Subsequently, if the user applies a touch input to the touchscreen 151 along a first desired trace [S1908, S1909], the controller 180 may be able to control a first handwritten object, which is drawn along the first desired trace, to be displayed on the touchscreen 151 [S1910, S1911]. In doing so, if the first handwritten object is drawn in the first handwriting input mode, the controller 180 may control the first handwritten object to be further displayed on an external terminal set to share handwritten inputs as well as on the touchscreen 151 [S1910]. In particular, in case that the first handwritten object is drawn in the 1^{st} handwriting input mode, unlike the case that the first handwritten object is drawn in the second handwriting input mode, the controller 180 may be able to control the first handwritten object to be displayed on the external terminal as well as on the touchscreen 151.

In case that a touch input is applied not to the mobile terminal but to the external terminal along a second desired trace [S1912], the controller 180 may be able to control whether to display a handwritten object drawn along the second desired trace based on a handwriting input authority of the external terminal. In particular, in case that a touch input is drawn along the second desired trace on the external terminal having the handwriting input authority [S1913], the controller 180 may be able to control the handwritten object drawn along the second desired trace to be displayed on the touchscreen 151 [S1914]. On the other hand, if the touch input is drawn along the second desired trace on an external terminal having the handwriting input authority not granted thereto [S1913], the controller 180 may control the handwritten object drawn on the corresponding external terminal not to be displayed on the touchscreen 151 despite the touch input to the corresponding external terminal [S1915].

Yet, it may be unnecessary for a handwritten object, which is created through an external terminal having the handwriting input authority, to be always displayed on the touchscreen 151 of the mobile terminal 100. As mentioned in the foregoing descriptions of the steps S1905 to S1910, a mode of the external terminal may be set to the first or second handwriting input mode. In this case, the controller 180 may be able to control a handwritten object to be displayed on the touchscreen 151 only if the mode of the external terminal is set to the first handwriting input mode.

According to the description with reference to FIG. 19, if the mobile terminal 100 and the external terminal are set to share handwriting inputs with each other, the controller 180 is able to grant a handwriting input authority to the external terminal. Moreover, if a handwritten object (i.e., a handwritten object created in the first handwriting input mode) set to be shared with the external terminal is drawn on the touchscreen 151 of the mobile terminal 100 according to the present invention, the mobile terminal 100 may be able to grant an authority of editing a handwritten object previously drawn to an external terminal set to share a handwriting input. In this case, the editing authority may be provided to adjust such a displayed form of the handwritten object as a size change of the handwritten object previously drawn, a color change of the handwritten object previously drawn, a displayed position change of the handwritten object previously drawn and the like. This shall be described in detail with reference to FIG. 21.

FIG. 21 is a diagram of touchscreen configuration for one example of setting an editing authority of a handwritten object displayed on a touchscreen.

Referring to FIG. 21, for clarity, assume that a handwritten object has been drawn along a trace of a user's touch input on the touchscreen 151 of the mobile terminal 100. If the user applies an appropriate user input to the handwritten object drawn on the touchscreen 151 (e.g., the handwritten object displayed on the touchscreen 151 is long pressed), referring to FIG. 21 (a), the controller 180 may be able to control a popup menu 2110 to be displayed to set a handwritten object editing authority. In the example shown in FIG. 21 (a), if an item 'authority' is selected, referring to FIG. 21 (b), the controller may control a setting screen 2120 to be displayed. In this case, the setting screen 2120 is configured to display an external terminal list of external terminals set to share handwriting inputs (e.g., the external terminals set to share the handwritten inputs include Jane's terminal and Knoster's terminal in the example shown in FIG. 21 (b)) and adjust whether to grant an authority of editing a handwritten object selected per a sharing terminal. In the example shown in FIG. 21 (b), the editing authority is granted to the Jane's terminal but is not granted to the Knoster's terminal. Hence, the Jane's terminal is able to remotely adjust a color, displayed position, displayed size and the like of the handwritten object displayed on the touchscreen 151 of the mobile terminal 100 but the Knoster's terminal may be unable to adjust the color, displayed position, displayed size and the like of the handwritten object displayed on the touchscreen 151 of the mobile terminal 100.

By receiving a control signal from the editing authority granted external terminal, the controller 180 is able to display a displayed form of the handwritten object displayed on the touchscreen 151.

Meanwhile, while operations of the mobile terminal 100 are being performed in FIG. 19, the controller 180 may be able to perform operations corresponding to the function tools shown in FIG. 3 at any time [not shown in FIG. 19]. In particular, while the handwriting inputs are shared with the external terminal, the controller 180 may be able to create a capture image using the capture pen 313. And, the controller 180 may be able to transmit the capture image to a third external terminal using the share pen 315. Moreover, as mentioned in the foregoing description with reference to FIG. 11, a voice recording may proceed together with a handwriting input. In case that the voice recording is performed, the controller 180 is able to further transmit a recording data to an external terminal, with which the recording data will be shared by the controller 180, together with a handwritten object. In this case, as mentioned in the foregoing description with reference to FIG. 19, the recording data provided to the external terminal may be created in the first handwriting input mode only.

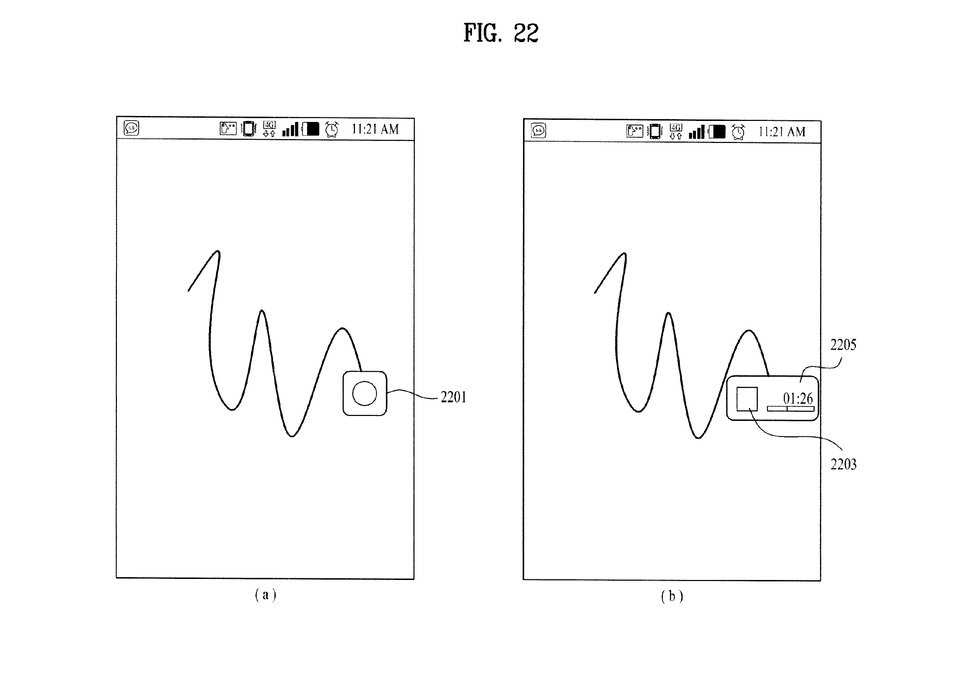

In the example shown in FIG. 11, if the draw pen 321 is selected, the recording button is displayed on the touchscreen 151. Subsequently, a voice recording can proceed on the touchscreen 151 as soon as a handwritten object is inputted. Alternatively, after a handwritten object has been drawn, it may be able to control a recording button, which is provided to enable a voice recording to proceed, to be displayed. This is described in detail with reference to FIG. 22 as follows.

FIG. 22 is a diagram of display screen configuration for one example to describe a process for performing a voice recording after a handwritten object has been drawn on a touchscreen.

Referring to FIG. 22, if a user selects an item 'voice' from the popup menu 2110 shown in FIG. 21 (a), the controller 180 may be able to control a recording button 2201, which is provided to enable a voice recording to proceed, to be displayed one end of a handwritten object [FIG. 22 (a)]. If the recording button 2201 is selected, referring to FIG. 22 (b), the controller 180 replaces the recording button by a stop button 2203 and may then control the voice recording to proceed by activating the microphone 122. In FIG. 22 (b), a progress bar 205 may indicate a lapse time of the voice recording after activation of the microphone 122. If the voice recording is completed, the controller 180 may be able to replace the stop button 2203 by a play button. If the voice recording is completed, the controller 180 may be able to transmit a corresponding audio file to an external terminal in order for the audio file to be played by the external terminal.

In FIG. 11 and FIG. 22, if the voice recording is performed in the first handwriting input mode, the controller 180 may control the recording button 2201 to be displayed on the external terminal as well as on the touchscreen 151. If the recording button 2201 is selected in the external terminal, the controller 180 may be able to control the voice recording to proceed in a manner that a microphone of the external terminal is activated instead of the microphone 12 of the mobile terminal 100. Once the voice recording is completed, the controller 180 may be able to receive a recording data from the external terminal.

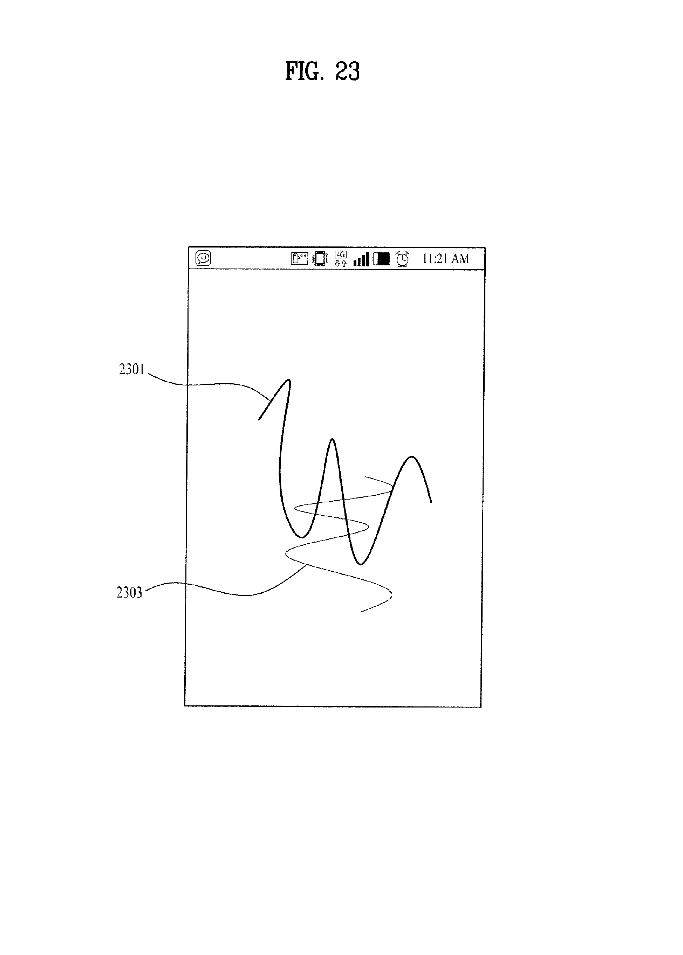

Occasionally, the mobile terminal 100 described with reference to FIG. 19 may be able to display both a first handwritten object created by itself and a second handwritten object created by an external terminal. In displaying the first handwritten object and the second handwritten object, referring to FIG. 23, the controller 180 may be able to control the first handwritten object 2301 and the second handwritten object 2303 to be displayed in a manner of overlapping with each other.

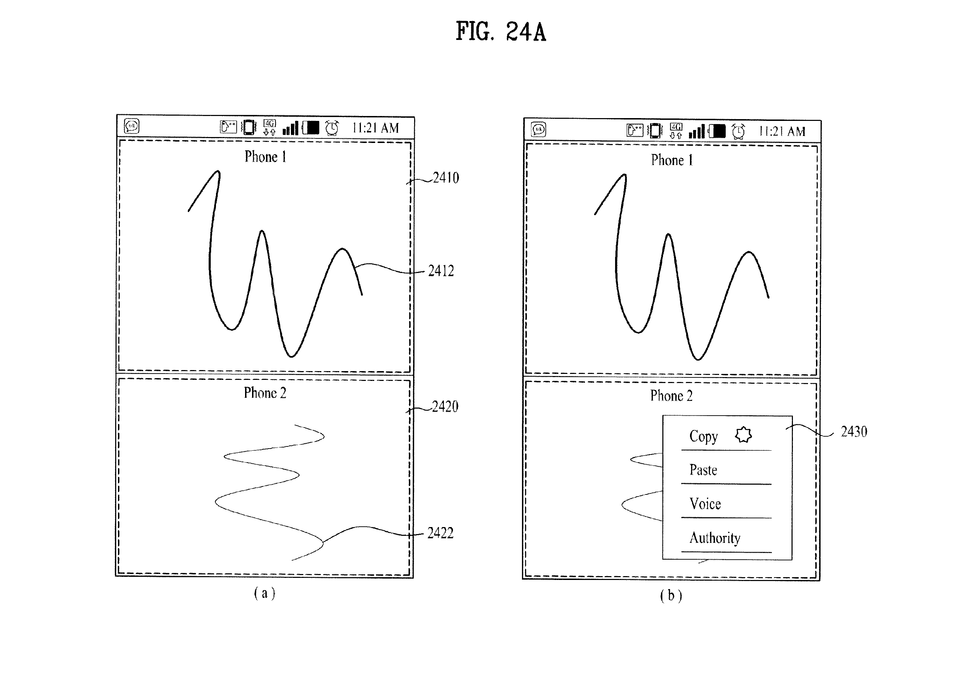

On the other hand, referring to FIG. 24A, the controller 180 may control a first handwritten object 2412 to be displayed on a first region 2410 of the touchscreen 151 and may control a second handwritten object 2422 to be displayed on a second region 2420 of the touchscreen 151 failing to overlap with (or overlapping partially at least) with the first region 2410. Since the first handwritten object 2412 and the second handwritten object 2422 are displayed on the different regions, respectively, it may be able to raise visibility of the handwritten objects.

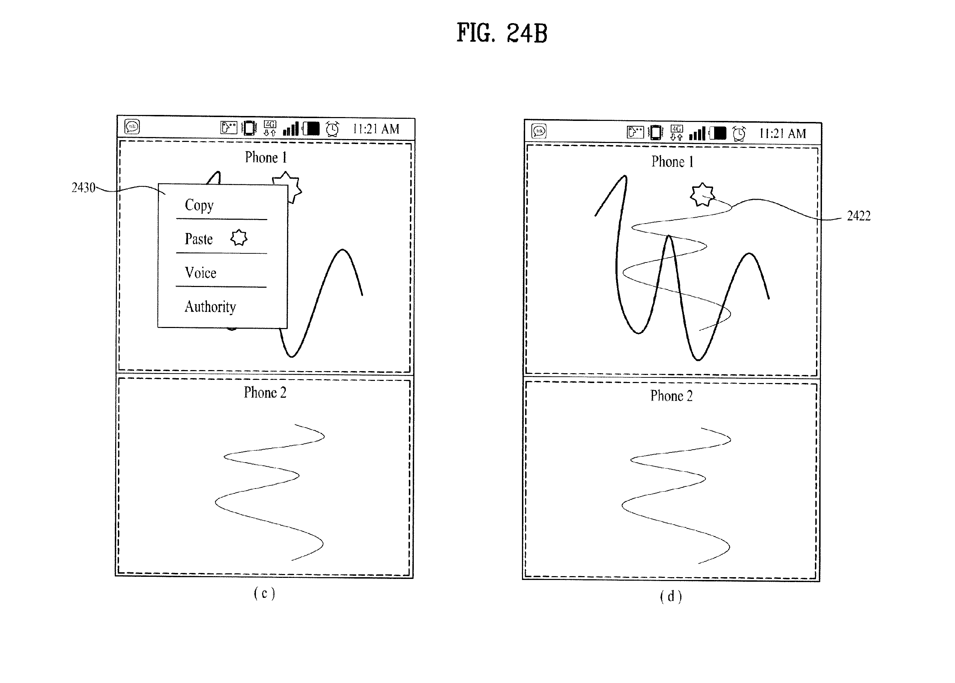

Moreover, based on a user input, the controller 180 copies the first handwritten object 2412 situated in the first region 2410 and then pastes it on the second region 2420. The controller 180 copies the second handwritten object 2422 situated in the second region 2420 and then pastes it on the first region 2410. For instance, if a prescribed user input is applied to the second handwritten object 2422 situated in the second region 2420 [FIG. 24A], the controller 180 may be able to control the popup menu 2430 shown in FIG. 21 (a) to be displayed [FIG. 24B]. After an item 'copy' has been selected from the popup menu 2430 displayed on the touchscreen 151, if a touch input is applied to a desired point in the first region 2410, referring to FIG. 24C, the controller 180 may be able to control a popup menu 2430, which is provided to enable the copied second handwritten object 2422 to be pasted, to be displayed. Thereafter, if an item 'paste' is selected in response to a user input, the controller 180 may be able to control the second handwritten object 2422 to be pasted on the desired point [FIG. 24D].

According to the description with reference to FIG. 19, after the first handwritten object has been created from the mobile terminal 100, the second handwritten object is created from the external terminal. Yet, it may be unnecessary for the second handwritten object to be created after the creation of the first handwritten object. On the contrary, after the first handwritten object has been created, the first handwritten object may be created. And, both of the first handwritten object and the second handwritten object may be created at the same time.

In particular, while the steps S1904 to S1911 shown in FIG. 19 are in progress, the steps S1912 to S1915 can simultaneously proceed at any time. Even if the step S1904 does not proceed yet, the steps S1912 to S1915 may proceed.

Accordingly, embodiments of the present invention provide various effects and/or features.

First of all, the present invention enhances convenience of user's manipulation.

Secondly, the present invention provides a mobile terminal capable of sharing a handwritten object drawn on a touchscreen with an external terminal with ease.

Thirdly, the present invention provides a mobile terminal capable of performing a handwriting input and a voice recording simultaneously.

It will be appreciated by those skilled in the art that the present invention can be specified into other form(s) without departing from the spirit or scope of the inventions.

In addition, the above-described methods can be implemented in a program recorded medium as computer-readable codes. The computer-readable media may include all kinds of recording devices in which data readable by a computer system are stored. The computer-readable media may include ROM, RAM, CD-ROM, magnetic tapes, floppy discs, optical data storage devices, and the like for example and also include carrier-wave type implementations (e.g., transmission via Internet). Further, the computer may include the controller 180 of the terminal.

It will be appreciated by those skilled in the art that various modifications and variations can be made in the present invention without departing from the scope of the invention. Thus, it is intended that the present invention covers the modifications and variations of this invention provided they come within the scope of the appended claims and their equivalents.

In further embodiments, the invention provides a mobile terminal according to the present invention may include a wireless communication unit configured to perform a communication with an external terminal, a touchscreen configured to receive a first touch input of a first desired trace, and a controller, if the first touch input is applied in a first handwriting input mode, controlling a first handwritten object drawn along the first desired trace to be simultaneously displayed via the touchscreen and the external terminal, the controller, if the first touch input is applied in a second handwriting input mode, controlling the first handwritten object to be displayed on the touchscreen only.

In another embodiment the invention provides, a mobile terminal according to paragraph [00271], wherein if a 2^{nd} touch input of a 2^{nd} desired trace is applied by the external terminal, the controller determines whether to display a 2^{nd} handwritten object drawn along the 2^{nd} desired trace depending on a presence or non-presence of a handwriting input authority of the external terminal.

In another embodiment, the invention provides the mobile terminal of paragraph [00272], wherein if the external terminal does not have the handwriting input authority, the controller controls the 2^{nd} handwritten object not to be displayed on the touchscreen.

In another embodiment, the invention provides the mobile terminal of paragraph [00272], wherein if the external terminal has the handwriting input authority, the controller controls the 2^{nd} handwritten object to be displayed on the touchscreen.

In another embodiment, the invention provides the mobile terminal of paragraph [00272], wherein the controller controls the 1^{st} handwritten object and the 2^{nd} handwritten object to be displayed on different regions of the touchscreen, respectively.

## Claims

1. A mobile terminal comprising:
a wireless communication unit configured to communicate with an external terminal;
a touchscreen configured to receive a 1^{st} touch input of a 1^{st} desired trace; and
a controller configured such that:
if the 1^{st} touch input is applied in a 1^{st} handwriting input mode then a 1^{st} handwritten object drawn along the 1^{st} desired trace is simultaneously displayed via the touchscreen and the external terminal, and
if the 1^{st} touch input is applied in a 2^{nd} handwriting input mode, then the 1^{st} handwritten object is displayed on the touchscreen only.

2. The mobile terminal of claim 1, wherein the controller is further configured to determine, upon receipt of a 2^{nd} touch input of a 2^{nd} desired trace from the external terminal, whether to display a 2^{nd} handwritten object drawn along the 2^{nd} desired trace depending on a presence or non-presence of a handwriting input authority of the external terminal.

3. The mobile terminal of claim 2, wherein if the external terminal does not have the handwriting input authority, the controller controls the 2^{nd} handwritten object not to be displayed on the touchscreen and wherein if the external terminal has the handwriting input authority, the controller controls the 2^{nd} handwritten object to be displayed on the touchscreen.

4. The mobile terminal of claim 2, wherein the 1^{st} handwritten object is displayed on a 1^{st} region of the touchscreen and wherein the 2^{nd} handwritten object is displayed on a 2^{nd} region of the touchscreen.

5. The mobile terminal of any preceding claim, further comprising a microphone configured for a voice recording, wherein the controller is configured to activate the microphone to enable the voice recording to proceed in either the 1^{st} handwriting input mode or the 2^{nd} handwriting input mode.

6. The mobile terminal of claim 5, wherein if data of the voice recording is created in the 1^{st} handwriting input mode, the controller is configured to control the voice recording data to be provided to the external terminal, and wherein if the data of the voice recording is created in the 2^{nd} handwriting input mode, the controller controls the voice recording data not to be provided to the external terminal.

7. The mobile terminal of any preceding claim, wherein the controller is further configured to control a capture image to be created by capturing an output image displayed on the touchscreen.

8. The mobile terminal of claim 7, wherein the controller is configured to determine whether the 1^{st} handwritten object will be included in the capture image based on a user command.

9. The mobile terminal of claim 8, wherein the controller is configured to control the capture image to be transmitted to a 3^{rd} terminal.

10. The mobile terminal of claim 1, wherein the controller is configured to control a plurality of function tools, for entering the 1^{st} handwriting input mode or the 2^{nd} handwriting input mode, to be displayed on the basis of a user command.

11. The mobile terminal of claim 10, wherein a 1^{st} function tool among a plurality of the function tools is configured to enable the mobile terminal to enter the 1^{st} handwriting input mode and wherein a 2^{nd} function tool among a plurality of the function tools is configured to enable the mobile terminal to enter the 2^{nd} handwriting input mode.

12. The mobile terminal of claim 11, wherein the controller is configured to control at least one attribute assigned to either the 1^{st} function tool or the 2^{nd} function tool to be applied to the 1^{st} handwritten object.

13. A method of controlling a mobile terminal, comprising the steps of:
establishing a communication channel with an external terminal;
entering either a 1^{st} handwriting input mode or a 2^{nd} handwriting input mode based on a user input;
if a 1^{st} touch input of a 1^{st} desired trace is applied in the 1^{st} handwriting input mode, displaying a 1^{st} handwritten object drawn along the 1^{st} desired trace on both a touchscreen and the external terminal simultaneously; and
if the 1^{st} touch input is applied in the 2^{nd} handwriting input mode, displaying the 1^{st} handwritten object on the touchscreen only.

14. A computer program product comprising computer readable code which, when executed on a processing system, cause the processing system to perform the method of claim 13.

15. A computer readable medium comprising the computer readable code of claim 14.
